# EUROPEAN PATENT APPLICATION

(11) **EP 4 746 515 A1**
(43) Date of publication of application: **20.05.2026**
(21) Application number: 24850788.1
(22) Date of filing: 23.07.2024
(51) Int. Cl.: H04W 36/00

(54) **COMMUNICATION METHOD AND APPARATUS**

(30) Priority: 10.08.2023 CN 202311010420
(71) Applicant: Huawei Technologies Co., Ltd., Shenzhen, Guangdong 518129 (CN)
(72) Inventor: MAO, Yingchao, Shenzhen, Guangdong 518129 (CN); CHANG, Junren, Shenzhen, Guangdong 518129 (CN); QIANG, Li, Shenzhen, Guangdong 518129 (CN); LIU, Jianghua, Shenzhen, Guangdong 518129 (CN); DAI, Xizeng, Shenzhen, Guangdong 518129 (CN); WANG, Lingping, Shenzhen, Guangdong 518129 (CN); SHI, Yulong, Shenzhen, Guangdong 518129 (CN)
(74) Representative: MERH-IP Matias Erny Reichl Hoffmann Patentanwälte PartG mbB
(86) International application number: PCT/CN2024/106975
(87) International publication number: WO 2025/031138

(57) **Abstract**

A communication method and apparatus are provided and relate to the communication field. In the method, a first network device receives a handover request message from a second network device, the first network device obtains a first CSI report and a second CSI report, where the first CSI report is a CSI report obtained by a terminal device through measurement based on a reference signal of the first network device, and the second CSI report is a CSI report obtained by the terminal device through measurement based on a reference signal of the second network device, and if values of N parameters in the first CSI report are greater than or equal to values of corresponding parameters in the second CSI report, the first network device sends a handover complete message to the second network device, where N is a positive integer. In the foregoing design, a data transmission rate can remain stable during a handover, avoiding a sudden drop in a data rate during the handover.

## Description

### CROSS-REFERENCE TO RELATED APPLICATIONS

This application claims priority to Chinese Patent Application No. 202311010420.3, filed with the China National Intellectual Property Administration on August 10, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A dual active protocol stack (dual active protocol stack, DAPS) handover means that in a cell handover process, after receiving a radio resource control (radio resource control, RRC) message used for a handover and before successfully performing random access to a target base station, a terminal device maintains a connection to a source base station. From a delay perspective, a 0 ms interruption of data transmission in the cell handover process can be implemented through the DAPS handover.

In the DASP handover process, after the target base station sends a handover complete message to the source base station, the source base station stops downlink data transmission. When the terminal device just accesses the target base station, a data transmission rate may be low. Therefore, the data transmission rate can be restored to a high level only after a period of time. Currently, if the target base station sends the handover complete message to the source base station too early, a data transmission rate of the target base station may be low, affecting communication performance. If the target base station sends the handover complete message to the source base station too late, a data transmission delay is large.

### SUMMARY

This application provides a communication method and apparatus, to reduce impact of a cell handover on a data transmission rate.

According to a first aspect, this application provides a communication method. The method may be performed by a first network device or a communication apparatus (for example, a chip or a unit or a module having a corresponding function) that forms the first network device. The method includes: The first network device receives a handover request message from a second network device; the first network device obtains a first CSI report and a second CSI report, where the first CSI report is a CSI report obtained by a terminal device through measurement based on a reference signal of the first network device, and the second CSI report is a CSI report obtained by the terminal device through measurement based on a reference signal of the second network device; and if values of N parameters in the first CSI report are greater than or equal to values of corresponding parameters in the second CSI report, the first network device sends a handover complete message to the second network device, where N is a positive integer.

According to the foregoing method, the first network device obtains the first CSI report and the second CSI report. If the first network device determines that the values of the N parameters in the first CSI report are greater than or equal to the values of the corresponding parameters in the second CSI report, the first network device sends the handover complete message to the second network device, and the second network device stops downlink data transmission. In this way, before a data rate on a first network device side is good and stable, the second network device can perform data transmission, so that a data transmission rate remains stable during a handover, avoiding a sudden drop in a data rate during the handover, improving handover performance, and ensuring good user experience.

In a possible design, the method is applied to a DAPS handover.

In a possible design, when the first network device obtains the second CSI report, the first network device receives the second CSI report from the second network device or the terminal device.

In a possible design, when the first network device receives the second CSI report from the second network device, the first network device receives the handover request message from the second network device, where the handover request message includes the second CSI report.

In a possible design, when the first network device receives the second CSI report from the terminal device, the first network device receives a random access message from the terminal device, where the random access message includes the second CSI report.

In a possible design, when the first network device obtains the first CSI report, the first network device receives the first CSI report from the terminal device.

In a possible design, the first CSI report is carried in a random access message.

In a possible design, the N parameters include at least one of a CQI, an L1-RSRP, and an L1-SINR.

In a possible design, the first network device is a target network device, and the second network device is a source network device.

In a possible design, the parameters in the first CSI report include at least one of the following: a CQI, a rank indicator RI, a precoding matrix indicator PMI, an L1-RSRP, and an L1-SINR; and the parameters in the second CSI report include at least one of the following: a CQI, an RI, a PMI, an L1-RSRP, and an L1-SINR.

In a possible design, the second CSI report is a latest CSI report in CSI reports obtained by the terminal device through measurement based on the reference signal of the second network device; the second CSI report is determined based on K CSI reports obtained by the terminal device through measurement based on the reference signal of the second network device, where K is a positive integer greater than 1; or the second CSI report is a latest CSI report in CSI reports that have been obtained by the terminal device through measurement based on the reference signal of the second network device when the terminal device receives a handover command from the second network device.

In a possible design, the reference signal of the first network device and the reference signal of the second network device are CSI-RSs or SSBs.

According to a second aspect, this application provides a communication method. The method may be performed by a terminal device or a module (for example, a chip) in the terminal device. The method includes: The terminal device receives a radio resource control reconfiguration message from a second network device, where the radio resource control reconfiguration message indicates that a handover process of the terminal device is a DAPS handover; and the terminal device sends a second CSI report to a first network device, where the second CSI report is a CSI report obtained by the terminal device through measurement based on a reference signal of the second network device.

According to the foregoing method, the terminal device determines, based on the radio resource control reconfiguration message, that the handover process of the terminal device is the DAPS handover, and sends the second CSI report to the first network device, so that the second network device obtains the second CSI report.

In a possible design, the second CSI report is carried in a random access message.

In a possible design, the first network device is a target network device, and the second network device is a source network device.

In a possible design, parameters in the second CSI report include at least one of the following: a CQI, an RI, a PMI, an L1-RSRP, and an L1-SINR.

In a possible design, the second CSI report is a latest CSI report in CSI reports obtained by the terminal device through measurement based on the reference signal of the second network device; the second CSI report is determined based on K CSI reports obtained by the terminal device through measurement based on the reference signal of the second network device, where K is a positive integer greater than 1; or the second CSI report is a latest CSI report in CSI reports that have been obtained by the terminal device through measurement based on the reference signal of the second network device when the terminal device receives a handover command from the second network device.

In a possible design, the reference signal of the second network device is a CSI-RS or an SSB.

According to a third aspect, this application provides a communication method. The method includes: A second network device sends a handover request message to a first network device; the second network device sends a second CSI report to the first network device, where the second CSI report is a CSI report obtained by a terminal device through measurement based on a reference signal of the second network device; the terminal device sends a first CSI report to the first network device, where the first CSI report is a CSI report obtained by the terminal device through measurement based on a reference signal of the first network device; and the first network device receives the first CSI report and the second CSI report, and if values of N parameters in the first CSI report are greater than or equal to values of corresponding parameters in the second CSI report, the first network device sends a handover complete message to the second network device, where N is a positive integer.

According to a fourth aspect, this application provides a communication method. The method includes: A second network device sends a handover request message to a first network device, where the handover request message includes a second CSI report, and the second CSI report is a CSI report obtained by a terminal device through measurement based on a reference signal of the second network device; the terminal device sends a first CSI report to the first network device, where the first CSI report is a CSI report obtained by the terminal device through measurement based on a reference signal of the first network device; and the first network device receives the first CSI report and the second CSI report, and if values of N parameters in the first CSI report are greater than or equal to values of corresponding parameters in the second CSI report, the first network device sends a handover complete message to the second network device, where N is a positive integer.

According to a fifth aspect, this application provides a communication method. The method includes: A second network device sends a handover request message to a first network device; the second network device sends a radio resource control reconfiguration message to a terminal device, where the radio resource control reconfiguration message indicates that a handover process of the terminal device is a DAPS handover; the terminal device sends a first CSI report and a second CSI report to the first network device, where the first CSI report is a CSI report obtained by the terminal device through measurement based on a reference signal of the first network device, and the second CSI report is a CSI report obtained by the terminal device through measurement based on a reference signal of the second network device; and the first network device receives the first CSI report and the second CSI report, and if values of N parameters in the first CSI report are greater than or equal to values of corresponding parameters in the second CSI report, the first network device sends a handover complete message to the second network device, where N is a positive integer.

According to a sixth aspect, this application provides a communication method. The method may be performed by a terminal device or a module (for example, a chip) in the terminal device. The method includes: The terminal device receives first CSI configuration information and second CSI configuration information, and the terminal device measures a reference signal of a first network device based on the first CSI configuration information, to obtain a first CSI report, and measures a reference signal of a second network device based on the second CSI configuration information, to obtain a second CSI report; and if values of N parameters in the first CSI report are greater than or equal to values of corresponding parameters in the second CSI report, the terminal device sends indication information to the first network device, where the indication information indicates the first network device to send a handover complete message to the second network device, and N is a positive integer.

The first CSI configuration information indicates a resource of a first reference signal, and the second CSI configuration information indicates a resource of a second reference signal. The terminal device receives the first reference signal sent by the first network device, and performs measurement to obtain the first CSI report. The terminal device receives the second reference signal sent by the second network device, and performs measurement to obtain the second CSI report.

According to the foregoing method, if the terminal device determines that the values of the N parameters in the first CSI report are greater than or equal to the values of the corresponding parameters in the second CSI report, the terminal device sends the indication information to the first network device, so that the first network device sends the handover complete message to the second network device based on the indication information, and the second network device stops downlink data transmission. In this way, before a data rate on a first network device side is good and stable, the second network device can perform data transmission, so that a data transmission rate remains at a high level during a handover, avoiding a sudden drop in a data rate during the handover, improving handover performance, and ensuring good user experience.

In a possible design, the method further includes: The terminal device receives a radio resource control reconfiguration message from the second network device, where the radio resource control reconfiguration message indicates that a handover process of the terminal device is a DAPS handover.

In a possible design, the first CSI report is carried in a random access message.

In a possible design, the N parameters include at least one of a CQI, an L1-RSRP, and an L1-SINR.

In a possible design, the first network device is a target network device, and the second network device is a source network device.

In a possible design, the parameters in the first CSI report include at least one of the following: a CQI, a rank indicator RI, a precoding matrix indicator PMI, an L1-RSRP, and an L1-SINR; and the parameters in the second CSI report include at least one of the following: a CQI, an RI, a PMI, an L1-RSRP, and an L1-SINR.

In a possible design, the second CSI report is a latest CSI report in CSI reports obtained by the terminal device through measurement based on the reference signal of the second network device; the second CSI report is determined based on K CSI reports obtained by the terminal device through measurement based on the reference signal of the second network device, where K is a positive integer greater than 1; or the second CSI report is a latest CSI report in CSI reports that have been obtained by the terminal device through measurement based on the reference signal of the second network device when the terminal device receives a handover command from the second network device.

In a possible design, the reference signal of the first network device and the reference signal of the second network device are CSI-RSs or SSBs.

According to a seventh aspect, this application provides a communication method. The method may be performed by a first network device or a module (for example, a chip) in the first network device. The method includes: The first network device receives a handover request message from a second network device; the first network device receives indication information from a terminal device, where the indication information indicates the first network device to send a handover complete message to the second network device; and the first network device sends the handover complete message to the second network device based on the indication information.

According to the foregoing method, the first network device does not need to obtain a first CSI report and a second CSI report, to reduce signaling overheads between network devices. The first network device sends the handover complete message to the second network device based on the indication information, and the second network device stops downlink data transmission. In this way, before a data rate on a first network device side is good and stable, the second network device can perform data transmission, so that a data transmission rate remains at a high level during a handover, avoiding a sudden drop in a data rate during the handover, improving handover performance, and ensuring good user experience.

In a possible design, the first network device is a target network device, and the second network device is a source network device.

According to an eighth aspect, this application provides a communication method. The method includes: A second network device sends second CSI configuration information to a terminal device; the second network device sends a handover request message to a first network device; the first network device or the second network device sends first CSI configuration information to the terminal device; the terminal device receives the first CSI configuration information and the second CSI configuration information, and the terminal device measures a reference signal of the first network device based on the first CSI configuration information, to obtain a first CSI report, and measures a reference signal of the second network device based on the second CSI configuration information, to obtain a second CSI report; if values of N parameters in the first CSI report are greater than or equal to values of corresponding parameters in the second CSI report, the terminal device sends indication information to the first network device, where the indication information indicates the first network device to send a handover complete message to the second network device, and N is a positive integer; and the first network device receives the indication information from the terminal device, and the first network device sends the handover complete message to the second network device based on the indication information.

According to a ninth aspect, this application provides a communication method. The method may be performed by a first network device or a module (for example, a chip) in the first network device. The method includes: The first network device receives a handover request message from a second network device; and the first network device sends third CSI configuration information and fourth CSI configuration information, where a reporting periodicity that is of a third CSI report and that is configured based on the third CSI configuration information is greater than a reporting periodicity that is of a fourth CSI report and that is configured based on the fourth CSI configuration information; or a reporting type that is of a fourth CSI report and that is configured based on the fourth CSI configuration information is dynamic reporting, and a reporting type that is of a third CSI report and that is configured based on the third CSI configuration information is periodic reporting, where the third CSI report is obtained by a terminal device through measurement based on a reference signal configured based on the third CSI configuration information, and the fourth CSI report is obtained by the terminal device through measurement based on a reference signal configured based on the fourth CSI configuration information.

In the foregoing design, the first network device configures the fourth CSI configuration information in addition to the third CSI configuration information for the terminal device, so that the terminal device measures a reference signal of the first network and reports CSI reports more frequently. In other words, the terminal device can report the third CSI report and the fourth CSI report, so that the network can quickly obtain the CSI reports from the terminal device, adjust an MCS in time based on the received CSI reports, and quickly improve the MCS.

In an implementation, the first network device generates the third CSI configuration information and the fourth CSI configuration information, so that the first network device sends the third CSI configuration information and the fourth CSI configuration information to the second network device, and the second network device sends the third CSI configuration information and the fourth CSI configuration information to the terminal device.

In another implementation, the second network device negotiates with the first network device, so that the second network device generates the third CSI configuration information and the fourth CSI configuration information, and the second network device sends the third CSI configuration information and the fourth CSI configuration information to the terminal device.

In a possible design, the method further includes: The first network device receives a second CSI report, where the second CSI report is a CSI report obtained by the terminal device through measurement based on a reference signal of the second network device; the first network device receives the fourth CSI report; and if values of N parameters in the fourth CSI report are greater than or equal to values of corresponding parameters in the second CSI report, the first network device sends a handover complete message to the second network device, where N is a positive integer.

In a possible design, the first network device receives a second CSI report, where the second CSI report is a CSI report obtained by the terminal device through measurement based on a reference signal of the second network device; the first network device receives the third CSI report; and if values of N parameters in the third CSI report are greater than or equal to values of corresponding parameters in the second CSI report, the first network device sends a handover complete message to the second network device, where N is a positive integer.

In a possible design, the first network device receives a second CSI report, where the second CSI report is a CSI report obtained by the terminal device through measurement based on a reference signal of the second network device; the first network device receives the third CSI report and the fourth CSI report; and if values of N parameters in at least one of the third CSI report and the fourth CSI report are greater than or equal to values of corresponding parameters in the second CSI report, the first network device sends a handover complete message to the second network device, where N is a positive integer.

In a possible design, the first network device is a target network device, and the second network device is a source network device.

According to a tenth aspect, this application provides a communication method. The method includes: A second network device sends a handover request message to a first network device; the first network device sends third CSI configuration information and fourth CSI configuration information, where a reporting periodicity that is of a third CSI report and that is configured based on the third CSI configuration information is greater than a reporting periodicity that is of a fourth CSI report and that is configured based on the fourth CSI configuration information; or a reporting type that is of a fourth CSI report and that is configured based on the fourth CSI configuration information is dynamic reporting, and a reporting type that is of a third CSI report and that is configured based on the third CSI configuration information is periodic reporting; the terminal device receives the third CSI configuration information and the fourth CSI configuration information, and the terminal device measures, based on the third CSI configuration information, a reference signal configured based on the third CSI configuration information, to obtain the third CSI report, and measures, based on the fourth CSI configuration information, a reference signal configured based on the fourth CSI configuration information, to obtain the fourth CSI report; and the terminal device sends the third CSI report and the fourth CSI report to the first network device.

According to an eleventh aspect, this application provides a communication apparatus. The apparatus may be used in a terminal device or a network device, and the apparatus includes a unit configured to perform the method according to any one of the foregoing aspects.

According to a twelfth aspect, this application provides a communication device, including at least one processing element and at least one storage element. The at least one storage element is configured to store a program and data, and the at least one processing element is configured to: read and execute the program and the data that are stored in the storage element, so that the method according to any one of the foregoing aspects of this application is implemented.

According to a thirteenth aspect, this application further provides a computer program. When the computer program is run on a computer, the computer is enabled to perform the method according to any one of the foregoing aspects.

According to a fourteenth aspect, this application provides a communication apparatus. The apparatus includes an interface circuit, the interface circuit is configured to provide a program or input and/or output of instructions for at least one processor, and the at least one processor is configured to execute the program or the instructions, to enable the communication apparatus to implement the method according to any one of the foregoing aspects.

In a possible manner, the communication apparatus includes the at least one processor.

In a possible manner, the communication apparatus further includes one or more memories. The one or more memories store one or more programs, and when the program is executed by the one or more processors, the communication apparatus is enabled to perform the method according to any one of the foregoing aspects.

According to a fifteenth aspect, this application provides a computer storage medium. The storage medium stores a software program, and when the software program is read and executed by one or more processors, the method according to any one of the foregoing aspects may be implemented.

According to a sixteenth aspect, this application provides a computer program product including instructions. When the instructions are run on a computer, the computer is enabled to perform the method according to any one of the foregoing aspects.

According to a seventeenth aspect, this application provides a chip system. The chip system includes at least one chip and a memory. The at least one chip is configured to: read and execute a program stored in the memory, to implement the method according to any one of the foregoing aspects.

According to an eighteenth aspect, this application provides a communication system, where the system includes a terminal device, a first network device, and a second network device, the terminal device performs the method according to either of the second aspect or the sixth aspect, and the first network device performs the method according to any one of the first aspect, the seventh aspect, or the ninth aspect.

In this application, based on the implementations provided in the foregoing aspects, the implementations may be further combined to provide more implementations.

### BRIEF DESCRIPTION OF DRAWINGS

FIG. 1 is a diagram of an architecture of a mobile communication system to which an embodiment of this application is applied;
FIG. 2 is a flowchart of DAPS handover to which an embodiment of this application is applied;
FIG. 3 is an overview flowchart 1 of a communication method according to this application;
FIG. 4 is an overview flowchart 2 of a communication method according to this application;
FIG. 5 is an overview flowchart 3 of a communication method according to this application;
FIG. 6 is an overview flowchart 4 of a communication method according to this application;
FIG. 7 is an overview flowchart 5 of a communication method according to this application;
FIG. 8 is an overview flowchart 6 of a communication method according to this application;
FIG. 9 is an overview flowchart 6 of a communication method according to this application;
FIG. 10 is an overview flowchart 7 of a communication method according to this application;
FIG. 11 is a diagram of a structure of a communication apparatus according to this application; and
FIG. 12 is a diagram of a structure of another communication apparatus according to this application.

### DESCRIPTION OF EMBODIMENTS

Embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, and a 5th generation (5th generation, 5G) system or a new radio (new radio, NR) system, or may be applied to a future communication system or another similar communication system.

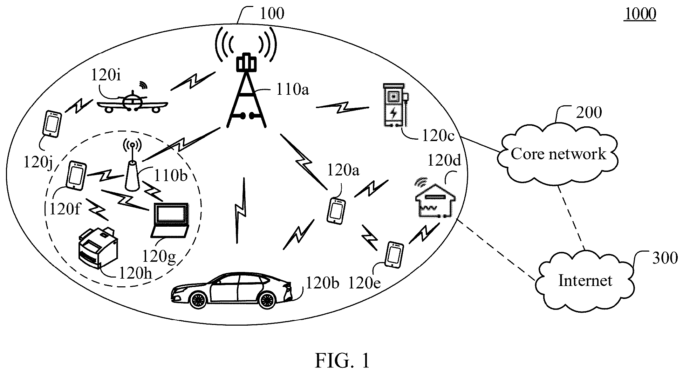

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal device (for example, 120a to 120j in FIG. 1). The terminal device is connected to the radio access network device in a wireless manner, and the radio access network device is connected to the core network in a wireless or wired manner. A core network device and the radio access network device may be independent and different physical devices, functions of the core network device and logical functions of the radio access network device are integrated into a same physical device, or some functions of the core network device and some functions of the radio access network device are integrated into one physical device. Terminal devices may be connected to each other in a wired or wireless manner, and radio access network devices may be connected to each other in a wired or wireless manner. FIG. 1 is merely a diagram. The communication system may further include another network device, for example, may further include a wireless relay device and a wireless backhaul device, which are not drawn in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or a unit that completes some functions of the base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete functions of a part or all of a physical layer. For specific descriptions of the foregoing protocol layers, refer to technical specifications related to the 3rd generation partnership project (3rd generation partnership project, 3GPP). The radio access network device may be a macro base station (for example, 110a in FIG. 1), or may be a micro base station or an indoor base station (for example, 110b in FIG. 1), or may be a relay node or a donor node. A specific technology and a specific device form that are used by the radio access network device are not limited in embodiments of this application. For ease of description, the following provides descriptions by using an example in which a network device is the radio access network device.

The terminal device may also be referred to as a terminal device, user equipment (user equipment, UE), a mobile station, a mobile terminal device, or the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, self-driving, telemedicine, a smart grid, smart furniture, a smart office, smart wearable, intelligent transportation, and a smart city. The terminal device may be a mobile phone, a tablet computer, a computer having a wireless transceiver function, a wearable device, a vehicle, an uncrewed aerial machine, a helicopter, an airplane, a ship, a robot, a robotic arm, a smart home device, or the like. A specific technology and a specific device form that are used by the terminal device are not limited in embodiments of this application.

The network device and the terminal device may be at fixed positions, or may be movable. The network device and the terminal device may be deployed on land, including an indoor or outdoor device, a handheld device, or a vehicle-mounted device; or may be deployed on a water surface; or may be deployed on a plane, a balloon, or an artificial satellite. Application scenarios of the network device and the terminal device are not limited in embodiments of this application.

Roles of the network device and the terminal device may be relative. For example, a helicopter or an uncrewed aerial vehicle 120i in FIG. 1 may be configured as a mobile network device. For the terminal device 120j that accesses the radio access network 100 through 120i, the uncrewed aerial vehicle 120i is a network device. However, for the network device 110a, 120i is a terminal device, that is, 110a and 120i communicate with each other by using a radio air interface protocol. Certainly, 110a and 120i may alternatively communicate with each other by using an interface protocol between network devices. In this case, for 110a, 120i is also a network device. Therefore, the network device and the terminal device may be collectively referred to as a communication apparatus. 110a and 110b in FIG. 1 each may be referred to as a communication apparatus with a function of the network device, and 120a to 120j in FIG. 1 each may be referred to as a communication apparatus with a function of the terminal device.

Communication may be performed between the network device and the terminal device, between network devices, or between terminal devices by using a licensed spectrum, an unlicensed spectrum, or both the licensed spectrum and the unlicensed spectrum; or may be performed by using a spectrum below 6 gigahertz (gigahertz, GHz), a spectrum above 6 GHz, or both the spectrum below 6 GHz and the spectrum above 6 GHz. A spectrum resource used for wireless communication is not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as the smart grid, the industrial control, the intelligent transportation, and the smart city. The function of the terminal device may alternatively be performed by a module (for example, a chip or a modem) in the terminal device, or may be performed by an apparatus including the function of the terminal device.

In embodiments of this application, the network device sends a downlink signal or downlink information to the terminal device, where the downlink information is carried on a downlink channel; and the terminal device sends an uplink signal or uplink information to the base station, where the uplink information is carried on an uplink channel. To communicate with the base station, the terminal device needs to establish a wireless connection to a cell controlled by the base station. The cell that establishes the wireless connection with the terminal device is referred to as a serving cell of the terminal device. When the terminal device communicates with the serving cell, the terminal device is further interfered by a signal from a neighboring cell.

It may be understood that, in embodiments of this application, a physical downlink shared channel (physical downlink shared channel, PDSCH), a physical downlink control channel (physical downlink control channel, PDCCH), a physical uplink control channel (physical uplink control channel, PUCCH), and a physical uplink shared channel (physical uplink shared channel, PUSCH) are merely examples of a downlink data channel, a downlink control channel, an uplink control channel, and an uplink data channel. In different systems and different scenarios, a data channel and a control channel may have different names. This is not limited in embodiments of this application.

The following first briefly describes basic technical concepts in this application.

### (1) Reference signal

The reference signal is a known signal provided by a transmit end for a receive end for channel estimation or channel sounding. The reference signal may be used for channel measurement, interference measurement, and the like. For example, a terminal obtains a channel state by measuring parameters such as reference signal received quality (reference signal received quality, RSRQ), a signal-to-noise ratio (signal-to-noise ratio, SNR), an interference-to-noise ratio (signal to interference plus noise ratio, SINR), a channel quality indicator (channel quality indicator, CQI), and a precoding matrix indicator (precoding matrix indicator, PMI).

Specifically, the reference signal in embodiments of this application may be a channel state information reference signal (channel state information reference signal, CSI-RS) or a synchronization signal and physical broadcast channel block (synchronization signal and physical broadcast channel block, SSB).

### (2) Reference signal resource

The reference signal resource may include at least one of resources of a reference signal, for example, a time-frequency resource, an antenna port, a power resource, and a scrambling code. The network device may send the reference signal based on the reference signal resource, and the terminal may receive the reference signal based on the reference signal resource.

When the reference signal is the CSI-RS, the reference signal resource may be a CSI-RS resource. When the reference signal is the SSB, the reference signal resource may be an SSB resource.

### (3) CSI report

In a process in which a wireless signal arrives at a receive end from a transmit end through a wireless channel, fading may occur due to scattering, reflection, and energy attenuation with a distance. In addition, the wireless signal may be interfered by another signal at the receive end, affecting reception of the wireless signal. The CSI report may also be referred to as CSI for short. The CSI report represents a feature of a radio channel. The CSI report may include, but is not limited to, at least one of the following parameters: a channel quality indicator (channel quality indicator, CQI), a rank indicator (rank indicator, RI), a precoding matrix indicator (precoding matrix indicator, PMI), a layer 1 signal to interference plus noise ratio (layer 1 signal to interference plus noise ratio, L1-SINR), and a layer 1 reference signal received power (layer 1 reference signal received power, L1-RSRP). In addition, the CSI report may further include another parameter. This is not limited in this application. The CSI may be sent by the terminal to the network device on a PUCCH or a PUSCH.

### (4) CSI configuration information

The CSI configuration information may include a CSI measurement configuration (CSI-ResourceConfig). The CSI measurement configuration includes a resource configuration and a resource type configuration of the reference signal, and is used to configure related information of a resource of the reference signal, for example, a time-frequency resource, an antenna port, a power resource, or a scrambling code of the reference signal. The resource type configuration may include, but is not limited to, periodic, aperiodic, or semi-persistent. For example, the CSI measurement configuration may include resource mapping (resourceMapping) and a periodicity and offset (periodicity AndOffset) of the reference signal. The periodicity and offset include a sending periodicity (which may also be referred to as a reference signal periodicity) and an offset (which may also be referred to as a slot offset) of the reference signal.

In addition, the CSI configuration information may further include a CSI report reporting configuration (CSI-ReportConfig). The CSI report reporting configuration is mainly used to configure a parameter related to CSI report reporting. The CSI report reporting configuration includes, but is not limited to, a report configuration identifier, a report quantity, a reporting type, a CSI report reporting parameter, and the like. The reporting type includes, but is not limited to, periodic reporting, aperiodic reporting, or semi-persistent reporting.

It may be understood that the CSI report reporting configuration and the CSI measurement configuration may be sent together or separately. This is not limited in this application.

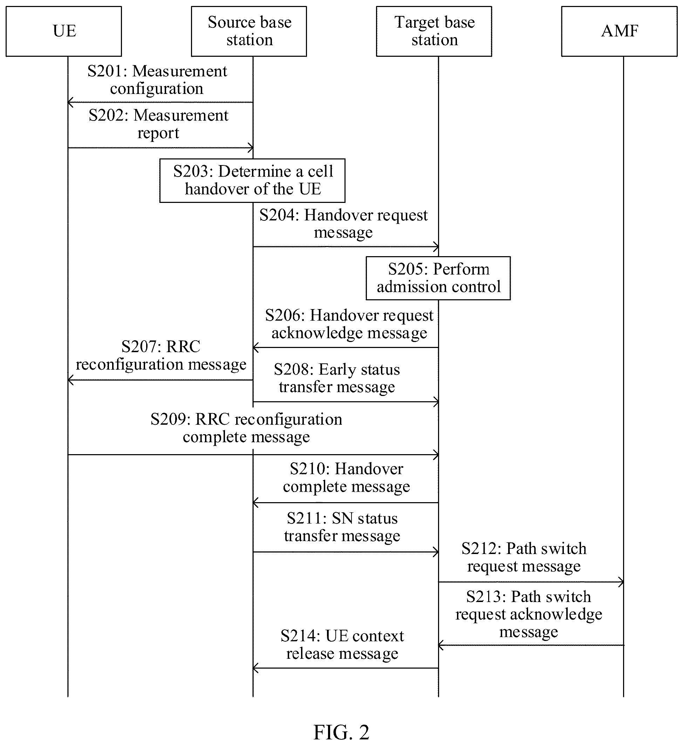

The following describes a basic process of a DAPS handover with reference to FIG. 2.

S201: A source base station sends a measurement configuration to UE.

Correspondingly, the UE receives the measurement configuration from the source base station. The measurement configuration sent by the source base station to the UE is a layer 3 measurement configuration, that is, a radio resource measurement (radio resource measurement, RRM) configuration.

S202: The UE performs measurement based on the measurement configuration sent by the source base station, and sends a measurement report to the source base station.

Correspondingly, the source base station receives the measurement report from the UE.

S203: The source base station determines a cell handover of the UE based on information such as the measurement report and the RRM configuration.

S204: The source base station sends a handover request (handover request) message to a target base station.

Correspondingly, the target base station receives the handover request message from the source base station.

The handover request message is used by the target base station to prepare for a handover. The handover request message may include, but is not limited to, the following information: a target cell identity (identity, ID), a parameter (for example, KgNB*) used to derive a key, a cell radio network temporary identifier (cell radio network temporary identifier, C-RNTI) of the UE in the source base station, the RRM configuration, an access stratum (access stratum, AS) configuration including antenna information and a downlink (downlink, DL) carrier frequency, a rule that is of mapping a current quality of service (quality of service, QoS) flow to a data radio bearer (data radio bearer, DRB) and that is applied to the UE, a system information block (system information block, SIB) 1 from the source base station, UE capabilities of different radio access technologies (radio access technologies, RATs), protocol data unit (protocol data unit, PDU) session related information, measurement information reported by the UE, and beam related information. The measurement information reported by the UE herein is layer 3 filtered measurement information. In addition, the source base station may further request one or more DRBs used for the DAPS handover.

S205: The target base station performs admission control (admission control).

For example, if the target base station obtains slice information, the target base station should perform slice-aware admission control. If a PDU session is associated with an unsupported slice, the target base station may reject the PDU session.

S206: The target base station sends a handover request acknowledge (handover request acknowledge) message to the source base station.

Correspondingly, the source base station receives the handover request acknowledge message from the target base station.

For example, the target base station prepares for the handover, and includes a transparent container in the handover acknowledge request message, where the transparent container is sent to the UE as an RRC message to perform the handover. The handover acknowledge request message further indicates whether the target gNB accepts the DAPS handover.

It should be noted that once the source base station receives the handover request acknowledge message, or once the source base station starts transmission of a handover command in a downlink (that is, the source base station sends an RRC message including the handover command to the UE (namely, S207)), the source base station may start data forwarding from the source base station to the target base station. For a DRB configured with a DAPS, a downlink packet data convergence protocol (packet data convergence protocol, PDCP) service data unit (service data unit, SDU) is forwarded by using a PDCP sequence number (sequence number, SN) allocated by the source base station, until a PDCP SN is allocated by the target base station in S211. In addition, for the DRB configured with the DAPS, the source base station does not stop sending a downlink data packet to the UE before receiving a handover complete message from the target base station in S210.

S207: The source base station sends the RRC reconfiguration message to the UE.

Correspondingly, the UE receives the RRC reconfiguration message from the source base station. The RRC reconfiguration message may be used to trigger an air interface handover.

For example, the source base station sends the RRC reconfiguration message based on the transparent container in the handover acknowledge request message received in S206.

The RRC reconfiguration message includes information needed for accessing the target base station: including at least a target cell ID, a new C-RNTI, and a target base station security algorithm identifier of a selected security algorithm. The message further includes a group of dedicated random access channel (random access channel, RACH) resources, an association between a RACH resource and a synchronization signal block (synchronization signal/PBCH block, SSB), an association between a RACH resource and a UE-specific CSI-RS configuration, a common RACH resource, system information of a target cell, and the like.

The RRC reconfiguration message further indicates whether a radio bearer of the target cell is configured as a DAPS bearer. When it indicates that the bearer is configured as the DAPS bearer, the UE may determine, based on the indication, that a handover process of the UE is a DAPS handover.

For example, the RRC reconfiguration message includes the handover command, and the handover command indicates the UE to perform a handover. For example, the handover command may be understood as a synchronization reconfiguration field in the RRC reconfiguration message. Alternatively, the handover command may be understood as the RRC reconfiguration message including a synchronization reconfiguration field. Alternatively, the handover command may be understood as the RRC reconfiguration message.

Meanings of the following several description manners in this application are the same: That the source base station sends the RRC reconfiguration message to the UE may alternatively be described as: The source base station sends the RRC reconfiguration message including the handover command to the UE, or the source base station sends the handover command to the UE.

S208: The source base station sends an early status transfer (early status transfer) message to the target base station for the DRB configured with the DAPS.

Correspondingly, the target base station receives the early status transfer message from the source base station.

The early status transfer message includes a downlink count value, and the downlink count value indicates a PDCP SN and a hyper frame number (hyper frame number, HFN) of a 1^{st} PDCP SDU forwarded by the source base station to the target base station.

S209: The UE sends an RRC reconfiguration complete message to the target base station.

Correspondingly, the target base station receives the RRC reconfiguration complete message from the UE.

For example, the UE accesses the target base station in a random access procedure, and sends the RRC reconfiguration complete message to the target base station. The RRC reconfiguration complete message may be included in a random access message 3.

In the DAPS handover, the UE is not detached from the source base station after receiving the RRC reconfiguration message. When receiving an explicit release indication (source release indication) from the target base station, the UE releases the source base station, and stops sending uplink data to the source base station and stops receiving downlink data. The DAPS handover is considered completed only after the UE releases the source base station based on the release indication from the target base station.

A specific location of the explicit release indication is not limited in this application, and a sequence of the explicit release indication, S210, and S211 is not limited in this application.

S210: In a case of the DAPS handover, the target base station sends a handover complete (handover success) message to the source base station.

Correspondingly, the source base station receives the handover complete message from the target base station.

The handover complete message may also be referred to as a handover success message, and the handover complete message is used to notify the source base station that the UE has successfully accessed the target base station (or the target cell).

S211: The source base station sends an SN status transfer (SN status transfer) message to the target base station for the DRB configured with the DAPS.

Correspondingly, the target base station receives the SN status transfer message from the source base station.

The SN status transfer message is used to transfer an uplink PDCP SN receiving state and a downlink PDCP SN sending state of a DRB that maintains a PDCP state (that is, for a radio link control (radio link control, RLC) acknowledged mode (acknowledged mode, AM)). The uplink PDCP SN receiving state includes at least a PDCP SN of a 1^{st} lost UL PDCP SDU. In addition, if there is a bitmap of a receiving state of an out-of-sequence UL PDCP SDU that needs to be retransmitted by the UE in the target cell, the uplink PDCP SN receiving state may further include the bitmap. The downlink PDCP SN sending state indicates a PDCP SN to be allocated by the target base station to a new PDCP SDU, and the new PDCP SDU does not have the PDCP SN.

S212: The target base station sends a path switch request (path switch request) message to an access and mobility management function (access and mobility management function, AMF) network element.

Correspondingly, the AMF network element receives the path switch request message from the target base station.

The path switch request message is used to trigger a 5G core network (5G core, 5GC) to switch a downlink data path to the target base station, and establish an NG-C interface instance to the target base station.

The 5GC switches the downlink data path to the target base station. A user plane function (user plane function, UPF) sends one or more "end marker" data packets to the source base station on an old path of each PDU session/tunnel, and then releases a user plane or transport network layer (transport network layer, TNL) resource of the source base station.

S213: The AMF network element sends a path switch request acknowledge (path switch request acknowledge) message to the target base station.

Correspondingly, the target base station receives the path switch request acknowledge message from the AMF network element.

S214: The target base station sends a UE context release (UE context release) message to the source base station.

Correspondingly, the source base station receives the UE context release message from the target base station.

The UE context release message is used to notify the source base station that path switching is completed. Then, the source network element may release radio and control plane related resources associated with the UE context. Any ongoing data forwarding can continue.

With reference to the procedure shown in FIG. 2, it can be learned that, after the UE accesses the target base station and sends the RRC reconfiguration complete message to the target base station, the target base station sends the handover complete message to the source base station, to notify the source base station that the UE accesses the target base station. After receiving the handover complete message from the target base station, the source base station stops downlink data transmission of the source base station. However, a standard moment for the target base station to send the handover complete message (HANDOVERSUCCES in the figure) to the source base station is not specified.

In an implementation of a base station, the target base station may immediately send the handover complete message to the source base station after receiving the RRC reconfiguration complete message. In this case, the source base station stops the downlink data transmission, and a data rate on a target base station side is usually low. Possible causes of the low data rate may include, but are not limited to, the following:

First, when the terminal device just accesses the target base station, a value of a modulation and coding scheme (modulation and coding scheme, MCS) that is set by the target base station for the terminal device may be low, for example, the value of the MCS may be 2. Therefore, the target base station can set a proper value of the MCS for the terminal device only after a period of time, so that a data transmission rate is restored to a high level. It takes a period of time to adjust the value of the MCS from low to a proper value.

Second, there is a delay in CSI measurement and reporting of a target cell, and the UE reports a CSI report only after accessing the target cell for a period of time, which is not conducive to adjusting to an appropriate MCS as soon as possible.

The RRC reconfiguration message including the handover command sent by the source base station to the UE may include a CSI configuration of the target cell. After receiving the RRC reconfiguration message including the handover command, the UE needs to first access the target cell, then measure a reference signal of the target cell based on a CSI measurement configuration in the CSI configuration of the target cell, and report a corresponding CSI report. Consequently, the UE reports the CSI report of the target cell after a period of time since accessing the target base station.

Third, CSI reports initially reported by the UE after the UE accesses the target cell may be defective. In this case, the source base station stops the downlink data transmission earlier, which is not conducive to maintaining the data transmission rate at a high level.

Based on the network system architecture shown in FIG. 1 and the content described in the foregoing related technologies, embodiments of this application provide several possible communication methods. An example in which the communication methods are performed by a first network device, a second network device, and a terminal device is used for description. For example, the first network device and the first network device each may be the access network device 110a or the access network device 110b in FIG. 1. The terminal device may be any one of the terminal devices 120 shown in FIG. 1. In addition, it should be understood that the first network device may alternatively be replaced with a communication apparatus having a function of the first network device or a chip, a unit, or a module in the communication apparatus having the function of the first network device. The second network device is similar. Alternatively, the terminal device may alternatively be replaced with a communication apparatus having a function of the terminal device or a chip, a unit, or a module in the communication apparatus having the function of the terminal device.

In the following embodiments, the first network device is different from the second network device. The first network device is a target base station, and the second network device is a source base station. Alternatively, the first network device is a network device of a target cell to which the terminal device is handed over, and the second network device is a network device of a source cell accessed by the terminal device, or a network device that sends a handover command. Optionally, the source cell and the target cell belong to different network devices. A reference signal of the first network device and a reference signal of the second network device are CSI-RSs or SSBs.

It should be noted that the following embodiments may be applied to a DAPS handover procedure, or may be applied to another handover procedure. This is not limited in this application. In addition, the following embodiments do not reflect a complete handover process, and are only a part of steps in the handover process. For a complete process and specific details of the handover process, refer to FIG. 2. Repeated parts are not described again.

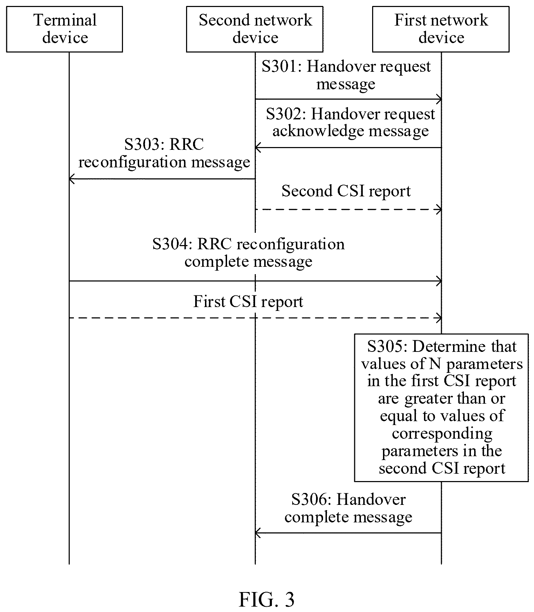

FIG. 3 is an example possible schematic flowchart of a communication method according to an embodiment of this application. As shown in FIG. 3, the method includes the following steps.

S301: A second network device sends a handover request message to a first network device.

Correspondingly, the first network device receives the handover request message from the second network device.

Before the second network device sends the handover request message to the first network device, a terminal device and the second network device may further perform S201 to S203. In addition, for specific content included in the handover request message, refer to S204. Details are not described herein again.

In a possible implementation, the handover request message may include a second CSI report.

In another possible implementation, a second CSI report may be carried in a message between network devices, that is, the second CSI report may not be carried in the handover request message, as shown by a dashed line in FIG. 3. It may be understood that the second network device may send the second CSI report to the first network device after sending the handover request message, that is, after S301 and before S305.

For example, the second network device may determine that a handover of the terminal device is a DASP handover, and the second network device may choose to include the second CSI report in the handover request message or an independent message.

The second CSI report is a CSI report obtained by the terminal device through measurement based on a reference signal of the second network device, the second CSI report is a CSI report obtained by the terminal device through measurement under the second network device, or the second CSI report is a CSI report obtained by the terminal device by measuring the reference signal of the second network device.

For example, the terminal device may receive CSI configuration information, namely, second CSI configuration information, from the second network device. The second CSI configuration information indicates a resource of a second reference signal. The terminal device receives the second reference signal sent by the second network device, and obtains the second CSI report through measurement. For example, the terminal device measures, based on the second CSI configuration information, a reference signal sent by the second network device, and reports a corresponding CSI report to the second network device. For specific content of the CSI configuration information, refer to the foregoing related descriptions. Details are not described herein again.

For example, the second CSI configuration information may include a CSI measurement configuration and a CSI report reporting configuration. The CSI measurement configuration includes a resource configuration and a resource type configuration of the reference signal sent by the second network device. The CSI report reporting configuration includes a parameter related to CSI report reporting. The terminal device may measure the reference signal of the second network device based on the CSI measurement configuration in the second CSI configuration, and report an obtained CSI report to the second network device based on the CSI report reporting configuration in the second CSI configuration.

In a possible implementation, the second CSI report may be any one of CSI reports obtained by the terminal device through measurement based on the reference signal of the second network device.

In a possible implementation, if the resource of the reference signal in the second CSI configuration is periodically configured, and a CSI report reporting type is periodic reporting, the terminal device may periodically measure the reference signal of the second network device, to obtain a plurality of CSI reports, and the second network device may also obtain the plurality of CSI reports reported by the terminal device. In this case, the second CSI report further has, but is not limited to, the following several possible forms.

Form a: The second CSI report is a latest CSI report in CSI reports obtained by the terminal device through measurement based on the reference signal of the second network device.

Alternatively, it may be described as that the second CSI report is a CSI report obtained through last measurement in the plurality of CSI reports obtained by the terminal device through measurement based on the reference signal of the second network device.

For example, both the terminal device and the network device may obtain a plurality of CSI reports, and use a last measured CSI report in the plurality of CSI reports as the second CSI report.

Form b: The second CSI report is determined based on K CSI reports obtained by the terminal device through measurement based on the reference signal of the second network device, where K is a positive integer greater than 1.

For example, both the terminal device and the network device may obtain a plurality of CSI reports, and the terminal device or the network device may further obtain an average value for each parameter in K CSI reports of the plurality of CSI reports, to obtain the second CSI report.

For example, it is assumed that each CSI report includes a CQI, an L1-SINR, and an L1-RSRP. An average value of K CQIs obtained from the K CSI reports is obtained to obtain a CQI average value, an average value of K L1-SINRs is obtained to obtain an L1-SINR average value, and an average value of K L1-RSRPs is obtained to obtain an L1-RSRP average value. Therefore, the second CSI report includes the CQI average value, the L1-SINR average value, and the L1-RSRP average value.

It may be understood that the foregoing uses only averaging as an example for description. The second CSI report may be determined by using another method, for example, weighted averaging. This is not limited in this application.

Form c: The second CSI report is a CSI report obtained by the terminal device through measurement based on the reference signal of the second network device when the terminal device receives a handover command from the second network device.

It should be noted that the second CSI report is not necessarily obtained through measurement when the terminal device receives the handover command, but is a CSI report that already exists (or has been stored) when the terminal device receives the handover command.

For example, the CSI report obtained by the terminal device through measurement based on the reference signal of the second network device when the terminal device receives the handover command from the second network device may be understood as a CSI report that is stored by the terminal device and that is based on the reference signal of the second network device when the terminal device receives the handover command from the second network device. In other words, the second CSI report may be a CSI report obtained through latest measurement of the reference signal of the second network device before the terminal device receives the handover command from the second network device.

For example, in a scenario in which the second CSI report is sent by the second network device to the first network device, the second CSI report is a latest stored CSI report in CSI reports that already exist (or have been stored) when the second network device sends the handover command to the terminal device.

It may be understood that the foregoing possible forms of the second CSI report are merely examples, and are not intended to limit this application.

S302: The first network device sends a handover request acknowledge message to the second network device. Correspondingly, the second network device receives the handover request acknowledge message from the first network device.

For example, before performing S302, the first network device may further perform admission control. The handover request acknowledge message includes a transparent container, and the transparent container is sent to the terminal device as content in a radio resource control reconfiguration message for the terminal device to perform a handover. For specific content included in the handover request acknowledge message, refer to S207.

S303: The second network device sends the radio resource control reconfiguration message to the terminal device.

Correspondingly, the terminal device receives the radio resource control reconfiguration message from the second network device.

S304: The terminal device synchronizes with a target base station, and sends a radio resource control reconfiguration complete message to the first network device.

For example, the terminal device completes synchronization with the target base station in a random access procedure.

Correspondingly, the first network device receives the radio resource control reconfiguration complete message from the terminal device.

The radio resource control reconfiguration complete message may be included in a random access message, for example, a random access message 3.

In a possible implementation, the random access message may further include a first CSI report. For example, the random access message 3 may further include the first CSI report.

In another possible implementation, the terminal device may alternatively send the first CSI report to the first network device after S304, as shown by a dashed line in FIG. 3, and before S305, that is, the first CSI report may not be carried in the radio resource control reconfiguration complete message.

For example, the handover request acknowledge message in S302 may include a first CSI configuration. The first CSI configuration information indicates a resource of a first reference signal, and the terminal device receives the first reference signal sent by the first network device, and performs measurement to obtain the first CSI report.

For example, the radio resource control reconfiguration message sent by the second network device to the terminal device (namely, S303) may include the first CSI configuration. The terminal device may measure, based on the first CSI configuration, a reference signal sent by the first network device, and report the first CSI report to the first network device.

It should be noted that after receiving the handover command or accessing a target cell, the terminal device performs CSI measurement on the reference signal of the first network device. For example, it is assumed that the first CSI configuration may include a CSI measurement configuration and a CSI report reporting configuration. The CSI measurement configuration includes a resource configuration and a resource type configuration of the reference signal sent by the first network device. The CSI report reporting configuration includes a parameter related to CSI report reporting. The terminal device may measure the reference signal of the first network device based on the CSI measurement configuration in the first CSI configuration, and report the obtained first CSI report to the first network device based on the CSI report reporting configuration in the first CSI configuration.

The first CSI report is a CSI report obtained by the terminal device through measurement based on the reference signal of the first network device, the first CSI report is a CSI report obtained by the terminal device through measurement under the first network device, or the first CSI report is a CSI report obtained by the terminal device by measuring the reference signal of the first network device.

S305: The first network device determines, based on the received first CSI report and second CSI report, that values of N parameters in the first CSI report are greater than or equal to values of corresponding parameters in the second CSI report, where N is a positive integer.

For example, the N parameters include at least one of a CQI, an L1-RSRP, and an L1-SINR.

For example, the first CSI report may be replaced with a first CSI result, and the second CSI report may be replaced with a second CSI result.

S306: The first network device sends a handover complete message to the second network device.

Correspondingly, the second network device receives the handover complete message from the first network device.

It may be understood that, in this application, the terminal device and the first network device may obtain P first CSI reports. The P first CSI reports may include p first CSI reports, and values of N parameters in each of the p first CSI reports may be greater than or equal to values of corresponding parameters in the second CSI report. P and p are positive integers. For example, if the resource of the reference signal in the first CSI configuration is periodically configured, and a CSI report reporting type is periodic reporting, the terminal device may periodically measure the reference signal of the first network device, to obtain a plurality of first CSI reports, and the second network device may also obtain the plurality of first CSI reports reported by the terminal device. In other words, the first network device may obtain the plurality of first CSI reports, determine, based on a first CSI report obtained each time, whether values of N parameters in the first CSI report are greater than or equal to values of corresponding parameters in the second CSI report, until values of N parameters in a first CSI report are greater than or equal to the values of the corresponding parameters in the second CSI report, and continue to perform S306.

For example, if the first network device determines that a received first CSI report reported based on the reference signal of the first network device meets a condition, that is, values of N parameters in the first CSI report are greater than or equal to values of corresponding parameters in the second CSI report, the first network device sends the handover complete message to the second network device. If the second network device determines that a received first CSI report reported based on the reference signal of the first network device does not meet the condition, that is, if values of M parameters in the first CSI report are less than values of corresponding parameters in the second CSI report, where the N parameters include the M parameters, the first network device does not send the handover complete message to the second network device.

For example, it is assumed that the N parameters include a CQI, and the first network device receives a first CSI report 1 from the terminal device, where the first CSI report 1 is a first CSI report obtained by the terminal device through measurement based on the reference signal of the first network device. If the first network device determines that a value of a CQI in the first CSI report 1 is less than a value of a CQI in the second CSI report, the first network device does not send the handover complete message to the second network device. Therefore, the second network device keeps a connection to the terminal device. Further, the first network device receives a first CSI report in a next reporting periodicity, for example, the first CSI report is denoted as a first CSI report 2. After the first network device receives the first CSI report 2, the first network device determines whether a value of a CQI in the first CSI report 2 is greater than or equal to the value of the CQI in the second CSI report. If the value of the CQI in the first CSI report 2 is greater than or equal to the value of the CQI in the second CSI report, the first network device sends the handover complete message to the second network device. If the value of the CQI in the first CSI report 2 is less than the value of the CQI in the second CSI report, the first network device waits for a first CSI report in a next reporting periodicity, until a value of a CQI in a received first CSI report X is greater than or equal to the value of the CQI in the second CSI report, and the first network device sends the handover complete message to the second network device, where X is a positive integer.

It should be noted that, before the first network device sends the handover complete message to the second network device, the first network device needs to determine whether a preset condition 1 is met. The preset condition 1 in the foregoing embodiment is that values of N parameters in a currently received first CSI report are greater than or equal to values of corresponding parameters in the second CSI report. In addition, the first network device may alternatively determine whether a preset condition 2 is met. The preset condition 2 may be that timing starts when the first network device receives the radio resource control reconfiguration complete message, until preset duration (for example, 30 ms) is reached, that is, a timer is started when the radio resource control reconfiguration complete message is received, and duration of the timer is the preset duration. Therefore, before the first network device sends the handover complete message to the second network device, the first network device determines that the preset condition 1 and/or the preset condition 2 are/is met, and the first network device sends the handover complete message to the second network device. The preset condition 1 and the preset condition 2 are merely examples. Based on a same concept, a person skilled in the art may further provide another preset condition.

In an optional solution, S306 may alternatively be replaced with that the first network device sends an explicit release indication to the terminal device. Correspondingly, the terminal device receives the explicit release indication from the first network device, releases the second network device, and stops sending uplink data to the second network device and stops receiving downlink data.

According to the foregoing method, the terminal device sends the first CSI report to the first network device, and the second network device sends the second CSI report to the first network device. If the first network device determines that the values of the N parameters in the first CSI report are greater than or equal to the values of the corresponding parameters in the second CSI report, the first network device sends the handover complete message to the second network device, and the second network device stops downlink data transmission. In this way, before a data rate on a first network device side is good and stable, the second network device can perform data transmission, so that a data transmission rate remains stable during a handover, avoiding a sudden drop in a data rate during the handover, improving handover performance, and ensuring good user experience.

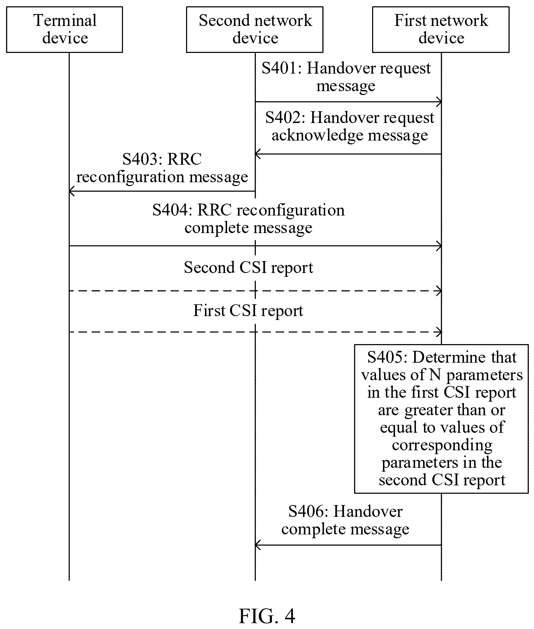

FIG. 4 is an example possible schematic flowchart of a communication method according to an embodiment of this application. As shown in FIG. 4, the method includes the following steps.

S401: A second network device sends a handover request message to a first network device.

Correspondingly, the first network device receives the handover request message from the second network device. Before the second network device sends the handover request message to the first network device, a terminal device and the second network device may further perform S201 to S203. In addition, for specific content included in the handover request message, refer to S204. Details are not described herein again.

S402: The first network device sends a handover request acknowledge message to the second network device.

Correspondingly, the second network device receives the handover request acknowledge message from the first network device.

For example, before performing S402, the first network device may further perform admission control. The handover request acknowledge message includes a transparent container, and the transparent container is sent to the terminal device as content in a radio resource control reconfiguration message for the terminal device to perform a handover. For specific content included in the handover request acknowledge message, refer to S207.

For example, the handover request acknowledge message may include a first CSI configuration. Further, for example, a radio resource control reconfiguration message sent by the second network device to the terminal device, that is, S403, may include the first CSI configuration. The terminal device may measure, based on the first CSI configuration, a reference signal sent by the first network device, and report a first CSI report to the first network device. For example, the first CSI report is a CSI report obtained by the terminal device through measurement based on the reference signal of the first network device. After receiving a handover command or accessing a target cell, the terminal device performs CSI measurement on the reference signal of the first network device. The terminal device measures the reference signal of the first network device based on the first CSI configuration, to obtain the first CSI report. For the first CSI report, refer to the related content in S304. Details are not described herein again.

S403: The second network device sends the radio resource control reconfiguration message to the terminal device.

Correspondingly, the terminal device receives the radio resource control reconfiguration message from the second network device.

In a possible implementation, the handover request acknowledge message in S402 may further include indication information Y. The indication information Y indicates the terminal device to send a second CSI report to the first network device. For the second CSI report, refer to the related content in S301. Details are not described herein again. For example, because the first network device may learn, by using the handover request message, that a handover process of the terminal device is a DAPS handover, the first network device may generate and send the indication information Y. Further, the second network device may send the radio resource control reconfiguration message to the terminal device, that is, S403, where the radio resource control reconfiguration message may include the indication information Y.

In another possible implementation, if the handover process is the DAPS handover, the second network device may generate and send the indication information Y. The radio resource control reconfiguration message may include the indication information Y.

In other words, the indication information Y may be from the first network device, or may be from the second network device. This is not limited in this application. In addition, the indication information Y may further indicate that the second CSI report is carried in a random access message. For example, the indication information Y may include 1 bit. If a value of the 1 bit is 1, the terminal device is indicated to send the second CSI report to the first network device. If the value of the 1 bit is 0, the terminal device is indicated not to send the second CSI report to the first network device. Alternatively, for example, the indication information Y may include 1 bit. If a value of the 1 bit is 0, the terminal device is indicated to send the second CSI report to the first network device. If the value of the 1 bit is 1, the terminal device is indicated not to send the second CSI report to the first network device. Alternatively, for example, the indication information Y may include 1 bit. If a value of the 1 bit is true (true), the terminal device is indicated to send the second CSI report to the first network device. If the value of the 1 bit is false (false), the terminal device is indicated not to send the second CSI report to the first network device.

S404: The terminal device synchronizes with a target base station, and sends a radio resource control reconfiguration complete message to the first network device.

For example, the terminal device completes synchronization with the target base station in a random access procedure.

Correspondingly, the first network device receives the radio resource control reconfiguration complete message from the terminal device.

The radio resource control reconfiguration complete message may be included in a random access message, for example, a random access message 3.

In a possible implementation, if the handover process is the DAPS handover, the terminal device sends the second CSI report to the first network device. The radio resource control reconfiguration message further indicates whether a radio bearer of the target cell is configured as a DAPS bearer. When it indicates that the bearer is configured as the DAPS bearer, the terminal device may determine, based on the indication, that the handover process of the terminal device is the DAPS handover.

In another possible implementation, the terminal device sends the second CSI report to the first network device based on the indication information Y.

The second CSI report may be sent separately, or may be sent together with the first CSI report in a same message.

Optionally, the second CSI report may be sent within preset duration after the terminal device accesses the first network device.

In a possible implementation, the first CSI report and/or the second CSI report may be carried in a random access message.

In another possible implementation, after the terminal device sends the radio resource control reconfiguration complete message to the first network device, and before S405, the terminal device sends the first CSI report and/or the second CSI report to the first network device. For details, refer to dashed lines in FIG. 4. For example, the second CSI report may be carried in an RRC message, UE assistance information (UE assistance information, UAI), or a medium access control control element (MAC control element, MAC CE) message.

Optionally, the second CSI report may be sent once. For example, if the second CSI report is carried in the random access message, the second CSI report does not need to be separately sent again. For another example, if the second CSI report is not carried in the random access message, the terminal device may send the second CSI report to the first network device after the random access message.

S405: The first network device determines, based on the received first CSI report and second CSI report, that values of N parameters in the first CSI report are greater than or equal to values of corresponding parameters in the second CSI report, where N is a positive integer.

For example, the N parameters include at least one of a CQI, an L1-RSRP, and an L1-SINR.

S406: The first network device sends a handover complete message to the second network device.

Correspondingly, the second network device receives the handover complete message from the first network device.

For S405, refer to S305, and for S406, refer to S406. Repeated parts are not described again.

In an optional solution, S405 may alternatively be replaced with that the first network device sends an explicit release indication to the terminal device. Correspondingly, the terminal device receives the explicit release indication from the first network device, releases the second network device, and stops sending uplink data to the second network device and stops receiving downlink data.

According to the foregoing method, the terminal device sends the first CSI report and the second CSI report to the first network device, where the first CSI report and the second CSI report may be included in a same message or two messages for sending, and may be carried in the random access message, or may be carried in another message. If the first network device determines that the values of the N parameters in the first CSI report are greater than or equal to the values of the corresponding parameters in the second CSI report, the first network device sends the handover complete message to the second network device, and the second network device stops downlink data transmission. In this way, before a data rate on a first network device side is good and stable, the second network device can perform data transmission, so that a data transmission rate remains at a stable level during a handover, avoiding a sudden drop in a data rate during the handover, improving handover performance, and ensuring good user experience.

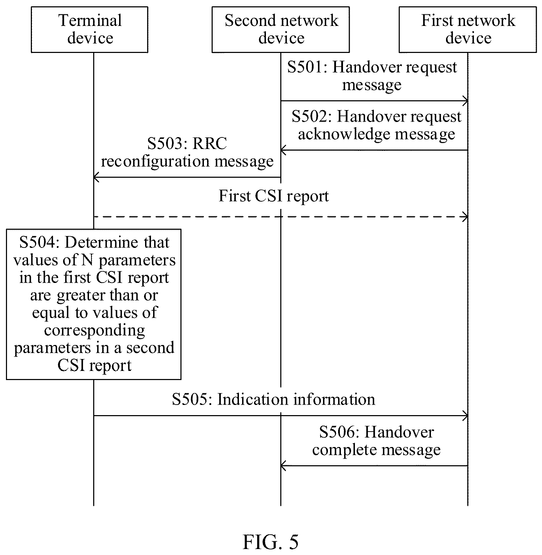

FIG. 5 is an example possible schematic flowchart of a communication method according to an embodiment of this application. As shown in FIG. 5, the method includes the following steps.

S501: A second network device sends a handover request message to a first network device.

Correspondingly, the first network device receives the handover request message from the second network device.

Before the second network device sends the handover request message to the first network device, a terminal device and the second network device may further perform S201 to S203. In addition, for specific content included in the handover request message, refer to S204. Details are not described herein again.

S502: The first network device sends a handover request acknowledge message to the second network device.

Correspondingly, the second network device receives the handover request acknowledge message from the first network device.

For example, before performing S502, the first network device may further perform admission control. The handover request acknowledge message includes a transparent container, and the transparent container is sent to the terminal device as content in a radio resource control reconfiguration message for the terminal device to perform a handover. For specific content included in the handover request acknowledge message, refer to S207.

In a possible implementation, the handover request acknowledge message in S502 may include a first CSI configuration. Further, for example, the second network device may send a radio resource control reconfiguration message to the terminal device, that is, S503, where the radio resource control reconfiguration message includes the first CSI configuration. The terminal device may measure, based on the first CSI configuration, a reference signal sent by the first network device, and report a first CSI report to the first network device. For example, the first CSI report is a CSI report obtained by the terminal device through measurement based on the reference signal of the first network device. After receiving a handover command or accessing a target cell, the terminal device performs CSI measurement on the reference signal of the first network device. The terminal device measures the reference signal of the first network device based on the first CSI configuration, to obtain the first CSI report. For the first CSI report, refer to the related content in S304. Details are not described herein again.

S503: The second network device sends the radio resource control reconfiguration message to the terminal device.

Correspondingly, the terminal device receives the radio resource control reconfiguration message from the second network device.

S504: The terminal device determines, based on the first CSI report and a second CSI report, that values of N parameters in the first CSI report are greater than or equal to values of corresponding parameters in the second CSI report, where N is a positive integer.

For example, the N parameters include at least one of a CQI, an L1-RSRP, and an L1-SINR.

For example, if a handover process is a DAPS handover, the terminal device determines, based on the first CSI report and the second CSI report, that the values of the N parameters in the first CSI report are greater than or equal to the values of the corresponding parameters in the second CSI report. The radio resource control reconfiguration message further indicates whether a radio bearer of the target cell is configured as a DAPS bearer. When it indicates that the bearer is configured as the DAPS bearer, the terminal device may determine, based on the indication, that the handover process of the terminal device is the DAPS handover.

For the first CSI report, refer to S304. For the second CSI report, refer to S301. Details are not described herein again.

S505: The terminal device sends indication information to the first network device.

Correspondingly, the first network device receives the indication information from the terminal device.

The indication information indicates the first network device to send a handover complete message to the second network device, the indication information indicates that the values of the N parameters in the first CSI report are greater than or equal to the values of the corresponding parameters in the second CSI report, the indication information indicates that channel quality indicated by the first CSI report is better than channel quality indicated by the second CSI report, the indication information indicates that data transmission during a handover can be ensured through transmission by the first network device alone, or the indication information indicates that the channel quality indicated by the first CSI report can meet a data transmission requirement.

For example, the indication information may be carried in a radio resource control reconfiguration complete message or carried in UE assistance information, or the indication information is sent by using a separate RRC message or sent by using a MAC CE.

S506: The first network device sends the handover complete message to the second network device.

It may be understood that, if the terminal device determines that the first CSI report obtained through measurement based on the reference signal of first network device meets a condition, that is, if the values of the N parameters in the first CSI report are greater than or equal to the values of the corresponding parameters in the second CSI report, the terminal device sends the indication information to the first network device. If the terminal device determines that the first CSI report obtained through measurement based on the reference signal of the first network device does not meet the condition, that is, if values of M parameters in the first CSI report are less than values of corresponding parameters in the second CSI report, where the N parameters include the M parameters, the terminal device does not send the indication information to the first network device.

For example, it is assumed that the N parameters include a CQI and an L1-RSRP, and a first CSI report obtained by the terminal device through measurement based on the reference signal of the first network device is denoted as a first CSI report 1. If the terminal device determines that a value of a CQI in the first CSI report 1 is less than a value of a CQI in the second CSI report, and a value of an L1-RSRP in the first CSI report 1 is greater than a value of an L1-RSRP in the second CSI report, the terminal device does not send the indication information, and the first network device does not send the handover complete message to the second network device. Therefore, the second network device keeps a connection to the terminal device. Further, the terminal device measures, on a configured next CSI measurement occasion, or periodically measures the reference signal sent by the first network device, to obtain a first CSI report 2. The terminal device determines whether a value of a CQI in the first CSI report 2 is greater than or equal to the value of the CQI in the second CSI report, and whether a value of an L1-RSRP in the second CSI report 2 is greater than or equal to the value of the L1-RSRP in the second CSI report. If the value of the CQI in the second CSI report 2 is greater than or equal to the value of the CQI in the second CSI report, and the value of the L1-RSRP in the second CSI report 2 is greater than or equal to the value of the L1-RSRP in the second CSI report, the terminal device sends the indication information to the first network device, and the first network device sends the handover complete message to the second network device. If the value of the CQI in the first CSI report 2 is less than the value of the CQI in the second CSI report, or the value of the L1-RSRP in the first CSI report 2 is less than the value of the L1-RSRP in the second CSI report, the terminal device measures, on a configured next CSI measurement occasion, or periodically measures the reference signal sent by the first network device, until a value of a CQI in a first CSI report X is greater than or equal to the value of the CQI in the second CSI report, and a value of an L1-RSRP in the first CSI report X is greater than or equal to the value of the L1-RSRP in the second CSI report. In this case, the terminal device sends the indication information to the first network device, and the first network device sends the handover complete message to the second network device based on the indication information, where X is a positive integer.

For another example, it is assumed that the N parameters include a CQI, a first CSI report obtained by the terminal device through measurement based on the reference signal of the first network device is denoted as a first CSI report a. If the terminal device determines that a value of a CQI in the first CSI report a is greater than a value of a CQI in the second CSI report, the terminal device sends the indication information to the first network device, and the first network device sends the handover complete message to the second network device based on the indication information.

In addition, in an optional solution, the indication information may alternatively indicate the first network device to send an explicit release indication to the terminal device. In this case, S506 may be replaced with that the first network device sends the explicit release indication to the terminal device. Correspondingly, the terminal device receives the explicit release indication from the first network device, releases the second network device, and stops sending uplink data to the second network device and stops receiving downlink data.

According to the foregoing method, the first network device does not need to obtain the first CSI report and the second CSI report, to reduce signaling overheads between network devices. If the terminal device determines that the values of the N parameters in the first CSI report are greater than or equal to the values of the corresponding parameters in the second CSI report, the terminal device sends the indication information to the first network device, so that the first network device sends the handover complete message to the second network device based on the indication information, and the second network device stops downlink data transmission. In this way, before a data rate on a first network device side is good and stable, the second network device can perform data transmission, so that a data transmission rate remains at a high level during a handover, avoiding a sudden drop in a data rate during the handover, improving handover performance, and ensuring good user experience.

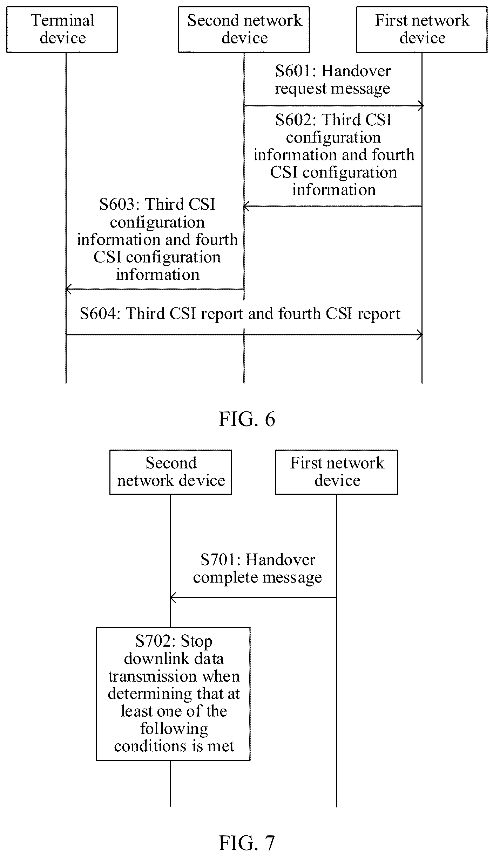

FIG. 6 is an example possible schematic flowchart of a communication method according to an embodiment of this application. As shown in FIG. 6, the method includes the following steps.

S601: A second network device sends a handover request message to a first network device.

Correspondingly, the first network device receives the handover request message from the second network device.

Before the second network device sends the handover request message to the first network device, a terminal device and the second network device may further perform S201 to S203. In addition, for specific content included in the handover request message, refer to S204. Details are not described herein again.

S602: The first network device sends third CSI configuration information and fourth CSI configuration information to the second network device.

Correspondingly, the second network device receives the third CSI configuration information and the fourth CSI configuration information from the first network device.

For example, after receiving the handover request message, the first network device may send a handover request acknowledge message to the second network device. The handover request acknowledge message may include the third CSI configuration information and the fourth CSI configuration information.

In addition to sending the third CSI configuration information, the first network device further sends the fourth CSI configuration information to the second network device, that is, the first network device configures the fourth CSI configuration information in addition to the third CSI configuration information for the terminal device, so that the terminal device measures a reference signal of the first network and reports CSI reports more frequently, and the network can quickly obtain the CSI reports from the terminal device, adjust an MCS in time based on the received CSI reports, and quickly improve the MCS. A resource type configuration that is of a reference signal and that is configured based on the fourth CSI configuration information is not limited in this application, and a reporting type that is of a fourth CSI report and that is configured based on the fourth CSI configuration information is not limited either. The fourth CSI report is obtained by the terminal device through measurement based on the reference signal configured based on the fourth CSI configuration information.

Optionally, the fourth CSI configuration may be valid only during a handover. For example, when the terminal device accesses the first network device or the terminal device receives an explicit release indication from the first network device, where the explicit release indication indicates to release a source base station, the fourth CSI configuration is released or the fourth CSI configuration is invalid, and the terminal device no longer performs measurement and measurement reporting based on the fourth CSI configuration.

Further, in a possible implementation, a reporting periodicity that is of a third CSI report and that is configured based on the third CSI configuration information is greater than a reporting periodicity that is of the fourth CSI report and that is configured based on the fourth CSI configuration information; or a reporting type that is of the fourth CSI report and that is configured based on the fourth CSI configuration information is dynamic reporting, and a reporting type that is of a fourth CSI report and that is configured based on the third CSI configuration information is periodic reporting. The dynamic reporting may be aperiodic reporting or semi-persistent reporting. The third CSI report is obtained by the terminal device through measurement based on a reference signal configured based on the third CSI configuration information, and the fourth CSI report is obtained by the terminal device through measurement based on the reference signal configured based on the fourth CSI configuration information.

In an implementation, the first network device generates the third CSI configuration information and the fourth CSI configuration information, so that the first network device sends the third CSI configuration information and the fourth CSI configuration information to the second network device.

In another implementation, the second network device negotiates with the first network device, so that the second network device generates the third CSI configuration information and the fourth CSI configuration information. In this case, step S602 is optional.

S603: The second network device sends the third CSI configuration information and the fourth CSI configuration information to the terminal device.

Correspondingly, the terminal device receives the third CSI configuration information and the fourth CSI configuration information from the second network device.

For example, the second network device may send a radio resource control reconfiguration message to the terminal device, where the radio resource control reconfiguration message includes the third CSI configuration information and the fourth CSI configuration information.

S604: The terminal device measures, based on the third CSI configuration information, the reference signal configured based on the third CSI configuration information, to obtain the third CSI report, and sends the third CSI report to the first network device; and the terminal device measures, based on the fourth CSI configuration information, the reference signal configured based on the fourth CSI configuration information, to obtain the fourth CSI report, and sends the fourth CSI report to the first network device.

For example, after the terminal device receives a handover command or accesses a target cell, the terminal device performs S604.

In a possible implementation, when the reporting periodicity that is of the third CSI report and that is configured based on the third CSI configuration information is greater than the reporting periodicity that is of the fourth CSI report and that is configured based on the fourth CSI configuration information, the first network device may first receive the fourth CSI report, that is, receive the fourth CSI report earlier than the third CSI report, so that the first network device can obtain the CSI report earlier, and adjust an MCS in time based on the received CSI report.

In another possible implementation, the reporting type that is of the fourth CSI report and that is configured based on the fourth CSI configuration information is dynamic reporting. If dynamic reporting is aperiodic reporting, the terminal device may report the fourth CSI report more promptly, so that the first network device can obtain the CSI report earlier.

In addition, with reference to the embodiments shown in FIG. 3 and FIG. 4, the first network device may receive a second CSI report from the terminal device or the second network device. For the second CSI report, refer to S301.

In a possible implementation, if values of N parameters in at least one of the third CSI report and the fourth CSI report are greater than or equal to values of corresponding parameters in the second CSI report, the first network device sends a handover complete message to the second network device, where N is a positive integer. For example, the N parameters include at least one of a CQI, an L1-RSRP, and an L1-SINR.

For example, the first network device may receive the fourth CSI report. If values of N parameters in the fourth CSI report are greater than or equal to values of corresponding parameters in the second CSI report, the first network device sends the handover complete message to the second network device.

For example, the first network device receives the third CSI report and the fourth CSI report. If values of M parameters in the fourth CSI report are less than values of corresponding parameters in the second CSI report, where the N parameters include the M parameters, but values of N parameters in the third CSI report are greater than or equal to values of corresponding parameters in the second CSI report, the first network device sends the handover complete message to the second network device, where M is a positive integer less than or equal to N.

For example, the first network device receives the third CSI report. If values of N parameters in the third CSI report are greater than or equal to values of corresponding parameters in the second CSI report, the first network device sends the handover complete message to the second network device.

In the foregoing design, the first network device configures the fourth CSI configuration information in addition to the third CSI configuration information for the terminal device, so that the terminal device measures a reference signal of the first network device and reports corresponding CSI reports more frequently. In other words, the terminal device can report the third CSI report and the fourth CSI report, so that the network can quickly obtain the CSI reports reported by the terminal device, adjust an MCS in time based on the received CSI reports, and quickly improve the MCS.

FIG. 7 is an example possible schematic flowchart of a communication method according to an embodiment of this application. As shown in FIG. 7, the method includes the following steps.

S701: A first network device sends a handover complete message to a second network device.

Correspondingly, the second network device receives the handover complete message from the first network device.

S702: The second network device stops downlink data transmission when determining that at least one of the following conditions is met.

Condition 1: The second network device starts timing upon receiving the handover complete message, and first duration is reached.

For example, the second network device starts a timer upon receiving the handover complete message, and when the timer expires, the second network device stops the downlink data transmission. Optionally, timing duration of the timer is configured by a network or predefined in a protocol. For example, the timing duration of the timer may be configured by the second network device or configured by the first network device.

Condition 2: The second network device receives indication information Z.

For example, the terminal device determines, based on a first CSI report and a second CSI report, that values of N parameters in the first CSI report are greater than or equal to values of corresponding parameters in the second CSI report, where N is a positive integer. The terminal device sends the indication information Z to the second network device. The indication information Z indicates that the values of the N parameters in the first CSI report are greater than or equal to the values of the corresponding parameters in the second CSI report.

The N parameters include at least one of a CQI, an L1-RSRP, and an L1-SINR. For the first CSI report, refer to S304. For the second CSI report, refer to S301. Details are not described herein again.

Condition 3: The second network device determines that values of N parameters in the first CSI report are greater than or equal to values of corresponding parameters in the second CSI report, where N is a positive integer. The N parameters include at least one of a CQI, an L1-RSRP, and an L1-SINR.

For example, the terminal device sends the first CSI report to the second network device. The second network device receives the first CSI report from the terminal device. The second network device compares the values of the N parameters in the first CSI report with the values of the corresponding parameters in the second CSI report. If the values of the N parameters in the first CSI report are greater than or equal to the values of the corresponding parameters in the second CSI report, the second network device stops the downlink data transmission. For example, assuming that N parameters in a CSI report include a CQI, if a value of a CQI in the first CSI report is greater than or equal to a value of a CQI in the second CSI report, the second network device stops the downlink data transmission.

According to the foregoing method, after receiving the handover complete message from the first network device, the second network device does not immediately stop the downlink data transmission, but stops the downlink data transmission when a specific condition is met. In this way, before a data rate on a first network device side is good and stable, the second network device can perform data transmission, so that a data transmission rate remains stable during a handover, avoiding a sudden drop in a data rate during the handover, improving handover performance, and ensuring good user experience.

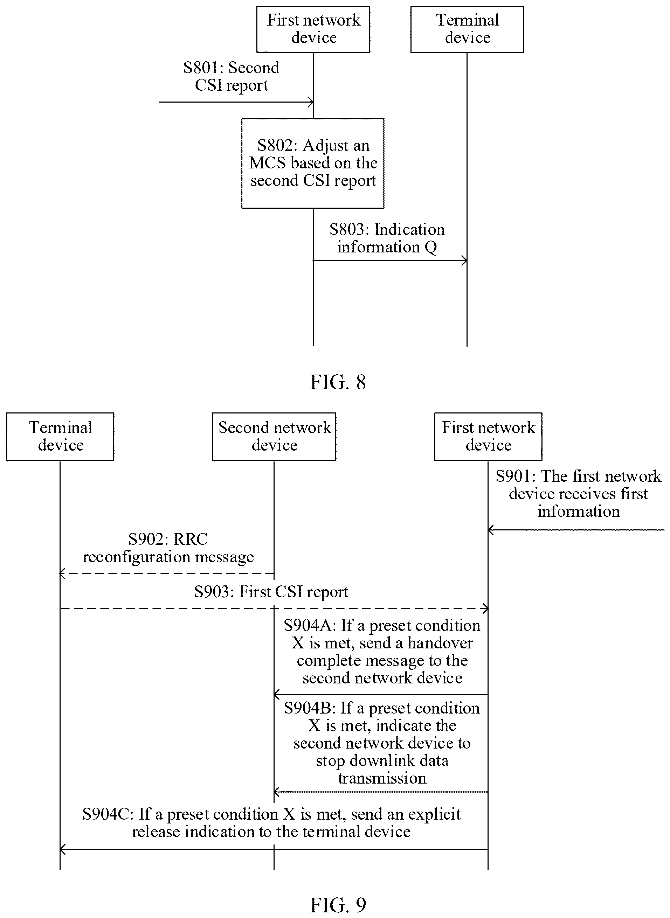

FIG. 8 is an example possible schematic flowchart of a communication method according to an embodiment of this application. As shown in FIG. 8, the method includes the following steps.

S801: A first network device receives a second CSI report.

For the second CSI report, refer to S301. Details are not described herein again.

In a possible implementation, a second network device sends a handover request message to the first network device. The handover request message may include the second CSI report.

In another possible implementation, the second network device may send the second CSI report to the first network device after sending the handover request message. For example, the second CSI report may be carried in a message between network devices, that is, the second CSI report may not be carried in the handover request message.

In still another possible implementation, a terminal device sends the second CSI report to the first network device.

In an example, if a handover process is a DAPS handover, the terminal device sends the second CSI report to the first network device. A radio resource control reconfiguration message sent by the second network device to the terminal device further indicates whether a radio bearer of a target cell is configured as a DAPS bearer. When it indicates that the bearer is configured as the DAPS bearer, the terminal device may determine, based on the indication, that the handover process of the terminal device is the DAPS handover.

In another example, the terminal device sends the second CSI report to the first network device based on indication information Y. For the indication information Y, refer to S403. Details are not described herein again.

S802: The first network device adjusts an MCS based on the second CSI report.

For example, the first network device adjusts an initial value or an initial index of the MCS of the first network device based on the second CSI report, that is, adjusts the MCS used for communication between the first network device and the terminal device.

S803: Optionally, the first network device sends indication information Q to the terminal device, where the indication information Q indicates an adjusted MCS.

Correspondingly, the terminal device receives the indication information Q from the first network device.

In the foregoing design, the first network device may adjust the MCS based on the second CSI report, to reduce an MCS adjustment delay of a target base station, and ensure that proper scheduling information is used during DAPS, so as to ensure that a data transmission rate remains stable during a handover, avoiding a sudden drop in a data rate during the handover, improving handover performance, and ensuring good user experience.

FIG. 9 is an example possible schematic flowchart of a communication method according to an embodiment of this application. As shown in FIG. 9, the method includes the following steps.

S901: A first network device receives first information, where the first information includes MCS information and/or data rate information.

In a possible implementation, a second network device sends the first information to the first network device. Correspondingly, the first network device receives the first information from the second network device.

In an example, the first network device receives a handover request message from the second network device, where the handover request message includes the first information.

In another example, the first information is included in a handover preparation message (handover preparation information). The handover preparation message is a message from the first network device to the second network device or a message from a CU to a DU. For example, the handover preparation message is included in the handover request message.

In another example, the first information may be carried in a message between network devices, that is, the first information may not be carried in the handover request message.

For example, a DU of the second network device sends the first information to a CU of the second network device, and the CU of the second network device sends the first information to a CU of the first network device. Optionally, the CU of the first network device sends the first information to a DU of the first network device.

In a possible implementation, a terminal device sends the first information to the first network device. Correspondingly, the first network receives the first information from the terminal device. For example, the terminal device sends the first information to the first network device, and the first information may be carried in an RRC message, UE assistance information, or a MAC CE. For example, after receiving an RRC reconfiguration message from the second network device (S207), the terminal device sends the first information to the first network device, or the first information may be carried in an RRC reconfiguration complete message (S209).

Optionally, before S901, the terminal device, the first network device, and the second network device may further perform one or more steps of S201 to S206.

### (1) MCS information

The MCS information may be understood as expected or recommended MCS information.

Optionally, the expected or recommended MCS information may be determined based on MCS information of the second network device. For example, the MCS information may be the MCS information of the second network device, or MCS information of a cell served by the second network device. Alternatively, the MCS information may be MCS information that is of the terminal device and that is in the second network device or MCS information of the terminal device that is in the second network device. For example, the second network device is a source base station, and the MCS information may be MCS information of a source cell. Alternatively, the MCS information may be MCS information of the terminal device in the source cell, or MCS information when the terminal device is connected to the source cell.

For example, the MCS information may include at least one of an MCS index, an MCS value, and an MCS threshold.

For example, when the MCS information includes the MCS index, the MCS information may further include an index of an MCS table. The first network device may determine an MCS table of a corresponding index from a plurality of MCS tables based on the index of the MCS table, and further determine an MCS of the corresponding index based on the MCS index and the determined MCS table. In addition, the MCS information may alternatively not include an index of an MCS table, but include only the MCS index. In this case, the first network device may determine an MCS of a corresponding index based on the MCS index and a default MCS table.

For another example, when the MCS information includes the MCS value, the MCS value may include, but is not limited to, at least one of values of the following parameters: a modulation scheme, a modulation order, spectral efficiency, and a product of a code rate and 1024.

For another example, when the MCS information includes the MCS threshold, a specific manner of determining the MCS threshold is not limited in this application. For example, the MCS threshold may be a threshold of an MCS index, or a threshold of a parameter that may be included in an MCS.

For example, the MCS information may be determined in, but is not limited to, the following manners.

Manner i: The MCS information may be determined based on a last MCS used for communication between the second network device and the terminal device before the second network device sends the first information to the first network device. For example, an index or a value of the last used MCS serves as the MCS information. Alternatively, the MCS threshold is determined based on the last used MCS.

Manner ii: The MCS information may be determined based on a last MCS used for communication between the second network device and the terminal device before the second network device sends a handover command to the terminal device, or may be determined based on the last MCS used for communication between the second network device and the terminal device before the terminal device receives the handover command.

Manner iii: The MCS information may be determined based on a plurality of MCSs used for communication between the terminal device and the second network device within a period of time. For example, the period of time herein may be preset duration. For example, the period of time herein is a period of time before the terminal device receives a radio resource reconfiguration message, or a period of time before the second network device sends the handover request message to the first network device.

For example, an average value of values of parameters of the plurality of MCSs within the period of time may be used as the MCS information, a rounding result of an average value of indexes of the plurality of MCSs within the period of time may be used as the MCS information, or the MCS threshold may be determined based on the plurality of MCSs within the period of time.

### (2) Data rate information

For example, the data rate information may be understood as expected or recommended data rate information.

For example, the data rate information may be data rate information of the second network device, data rate information of a cell served by the second network device, data rate information that is of the terminal device and that is in the second network device, or data rate information of the terminal device that is in the second network device. For example, the second network device is a source base station, and the data rate information may be data rate information of a source cell, data rate information of the terminal device in the source cell, or data rate information when the terminal device is connected to the source cell.

The data rate information includes at least one of a data rate, a data rate threshold, a data rate range, or other information that can represent the data rate. For example, a unit of the data rate may be Mbps.

The data rate information may be determined in, but not limited to, the following manners.

Manner i: The data rate information may be determined based on a latest measured data rate of communication between the second network device and the terminal device before the second network device sends the first information to the first network device.

For example, the data rate threshold or the data rate range is determined based on the latest measured data rate, or the latest measured data rate is directly used as the data rate information.

Manner ii: The data rate information may be determined based on a latest measured data rate of communication between the second network device and the terminal device before the second network device sends a handover command to the terminal device, or may be determined based on a latest measured data rate of communication between the second network device and the terminal device before the terminal device receives the handover command.

Manner iii: The data rate information may be determined based on data rates within a period of time. The period of time herein may be preset duration. For example, the period of time herein is a period of time before the terminal device receives a radio resource reconfiguration message, or a period of time before the second network device sends the handover request message to the first network device.

For example, an average value of the data rates within the period of time may be used as the data rate information, or the data rate threshold or the data rate range may be determined based on the average value of the data rates within the period of time.

S902: The terminal device receives an RRC reconfiguration message from the second network device.

Correspondingly, the second network device sends the RRC reconfiguration message to the terminal device. The RRC reconfiguration message indicates the terminal to perform a handover. For example, the RRC reconfiguration message is the handover command.

For example, the RRC reconfiguration message further indicates whether a radio bearer of a target cell is configured as a DAPS bearer. When it indicates that the bearer is configured as the DAPS bearer, the terminal device may determine, based on the indication, that a handover process of the terminal device is a DAPS handover.

It should be understood that a sequence of step S902 and step S901 is not limited. S901 may be performed before S902, or S902 may be performed before S901.

S903: The first network device receives a first CSI report from the terminal device.

For example, the first network device determines second information based on the first CSI report, where the second information includes an MCS or a data rate of the first network device.

For example, the first network device receives the first CSI report from the terminal device. The terminal device determines the MCS or the data rate of the first network device based on the first CSI report. The MCS of the first network device is an MCS used for communication between the first network device and the terminal device. The data rate of the first network device is a data rate of communication between the first network device and the terminal device.

In a possible implementation, the radio resource control reconfiguration message includes a first CSI configuration. The terminal device may measure, based on the first CSI configuration, a reference signal sent by the first network device, and report the first CSI report to the first network device. For example, the first CSI report is a CSI report obtained by the terminal device through measurement based on the reference signal of the first network device. After receiving the handover command or accessing a target cell, the terminal device performs CSI measurement on the reference signal of the first network device. The terminal device measures the reference signal of the first network device based on the first CSI configuration, to obtain the first CSI report. For the first CSI report, refer to the related content in S304. Details are not described herein again.

For example, the MCS of the first network device may alternatively be an MCS of a cell served by the first network device. Alternatively, the MCS of the first network device may be an MCS that is of the terminal device and that is in the first network device or an MCS of the terminal device that is in the first network device. For example, the first network device is a target base station, and the MCS of the first network device may be an MCS of a target cell. Alternatively, the MCS of the first network device may be MCS information of the terminal device in the target cell or an MCS when the terminal device is connected to the target cell.

For example, the data rate of the first network device may alternatively be a data rate of a cell served by the first network device. Alternatively, the data rate of the first network device may be a data rate that is of the terminal device and that is in the first network device or a data rate of the terminal device that is in the first network device. For example, the first network device is a target base station, and the data rate of the first network device may be a data rate of a target cell, or the data rate of the first network device may be a data rate of the terminal device in the target cell or a data rate when the terminal device is connected to the target cell.

In a possible implementation, a DU of the first network device sends the MCS or the data rate of the first network device to a CU of the first network device. The MCS or the data rate of the first network device may be carried in an F1 interface application protocol (F1 application protocol, F1AP) message.

S904A: If a preset condition X is met, the first network device sends a handover complete message to the second network device.

For example, if the first network device determines, based on the first information and the second information, that the preset condition X is met, the first network device sends the handover complete message to the second network device. In a possible design, if the preset condition X is met, the first network device sends the handover complete message to the second network device. Correspondingly, the second network device receives the handover complete message from the first network device. Optionally, the second network device receives the handover complete message from the first network device, and the second network device stops downlink data transmission.

S904B: If a preset condition X is met, the first network device indicates the second network device to stop downlink data transmission.

For example, if the first network device determines, based on the first information and the second information, that the preset condition X is met, the first network device sends the handover complete message to the second network device.

In a possible design, if the preset condition X is met, the first network device indicates the second network device to stop the downlink data transmission. Correspondingly, the second network device receives, from the first network device, the indication indicating to stop the downlink data transmission. Optionally, when the second network device receives the handover complete message from the first network device, the second network device does not stop the downlink data transmission. After the second network device receives, from the first network device, the indication indicating to stop downlink transmission, the second network device stops the downlink data transmission.

S904C: If a preset condition X is met, the first network device sends an explicit release indication to the terminal device.

For example, if the first network device determines, based on the first information and the second information, that the preset condition X is met, the first network device sends the handover complete message to the second network device.

In a possible design, if the preset condition X is met, the first network device sends the explicit release indication to the terminal device. Correspondingly, the terminal device receives the explicit release indication from the first network device, releases the second network device, and stops sending uplink data to the second network device and stops receiving downlink data.

It may be understood that the first network device may perform one or more steps of S904A, S904B, or S904C.

If the first information includes the MCS information, and the second information includes the MCS of the first network device, the preset condition X may be that an MCS in the MCS information in the first information is greater than or equal to the MCS of the first network device in the second information; or if the first information includes the data rate information, and the second information includes the data rate of the first network device, the preset condition X may be that a data rate in the data rate information in the first information is greater than or equal to the data rate of the first network device in the second information.

That the first network device determines, based on the first information and the second information, that the preset condition X is met may alternatively be described as follows: If the first information includes the MCS information, and the second information includes the MCS of the first network device, it is determined, based on the MCS of the first network device in the second information and the MCS information in the first information, that the preset condition X is met; or if the first information includes the data rate information, and the second information includes the data rate of the first network device, it is determined, based on the data rate of the first network device in the second information and the data rate information in the first information, that the preset condition X is met.

Specifically, the following cases may be included but are not limited to:

Case a: If the first information includes the MCS information, the MCS information includes the MCS index, and the second information includes the MCS of the first network device, that the preset condition X is met or it is determined, based on the first information and the second information, that the preset condition X is met may be understood as that it is determined that an index of the MCS of the first network device is greater than or equal to the MCS index in the first information.

Case b: If the first information includes the MCS information, the MCS information includes the MCS value, and the second information includes the MCS of the first network device, that the preset condition X is met or it is determined, based on the first information and the second information, that the preset condition X is met may be understood as that it is determined that values of some or all parameters in the MCS of the first network device are greater than or equal to values of corresponding parameters in an MCS in the first information.

Case c: If the first information includes the MCS information, the MCS information includes the MCS threshold, and the second information includes the MCS of the first network device, determining that the preset condition X is met depends on a specific form of the MCS threshold. For details, refer to Case a and Case b.

Case d: If the first information includes the data rate information, the data rate information includes the data rate value (or threshold), and the second information includes the data rate of the first network device, that the preset condition X is met or it is determined, based on the first information and the second information, that the preset condition X is met may be understood as that it is determined that the data rate of the first network device is greater than or equal to the data rate (or threshold) in the first information.

Case e: If the first information includes the data rate information, the data rate information includes the data rate range, and the second information includes the data rate of the first network device, that the preset condition X is met or it is determined, based on the first information and the second information, that the preset condition X is met may be understood as that the data rate of the first network device falls within the data rate range.

It may be understood that the foregoing cases are merely examples, and are not intended to limit this application. In addition, the foregoing cases may be combined with each other. For example, if the index of the MCS of the first network device is greater than or equal to the MCS index in the first information, and the data rate of the first network device falls within the data rate range, it is determined that the preset condition X is met.

It should be understood that step S902 and step S903 in FIG. 9 are optional, that is, in some cases, S902 and/or S903 may not be performed.

According to the foregoing method, the first network device obtains the first information and determines the second information. If the first network device determines, based on the first information and the second information, that the preset condition X is met, the first network device sends the handover complete message to the second network device, or the second network device indicates the first network device to stop the downlink data transmission, or the second network device sends the explicit release indication to the terminal device. In this way, before a data rate on a first network device side is good and stable, the second network device can perform data transmission, so that a data transmission rate remains stable during a handover, avoiding a sudden drop in a data rate during the handover, improving handover performance, and ensuring good user experience.

In an implementation, when only step S901 is performed, according to the foregoing method, the first network device obtains the first information, and the first network device determines, based on the first information, to send the handover complete message to the second network device, or the second network device indicates the first network device to stop the downlink data transmission, or the second network device sends the explicit release indication to the terminal device. In this way, before a data rate on a first network device side is good and stable, the first network device and the second network device can perform data transmission, so that a data transmission rate remains stable during a handover, avoiding a sudden drop in a data rate during the handover, improving handover performance, and ensuring good user experience.

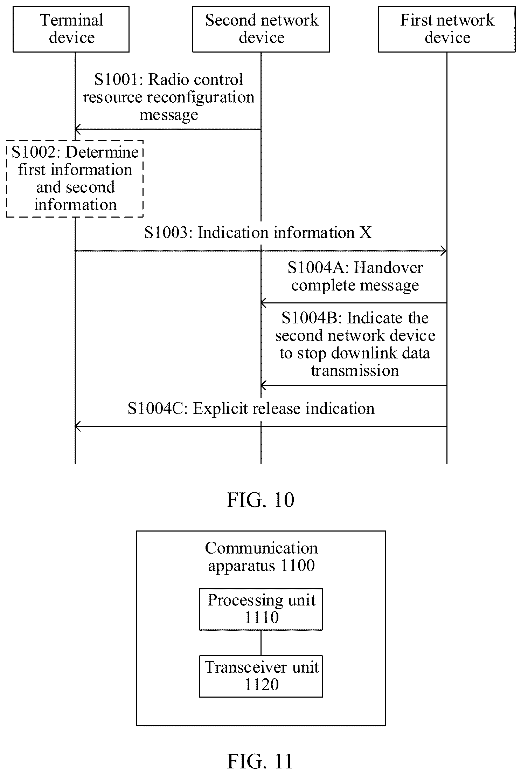

FIG. 10 is an example possible schematic flowchart of a communication method according to an embodiment of this application. As shown in FIG. 10, the method includes the following steps.

S1001: A terminal device receives an RRC reconfiguration message from a second network device.

Correspondingly, the second network device sends the RRC reconfiguration message to the terminal device.

For example, the RRC reconfiguration message further indicates whether a radio bearer of a target cell is configured as a DAPS bearer. When it indicates that the bearer is configured as the DAPS bearer, the terminal device may determine, based on the indication, that a handover process of the terminal device is a DAPS handover.

Optionally, before S1001, the terminal device, a first network device, and the second network device may further perform one or more steps of S201 to S206.

S1002: The terminal device determines first information and second information.

For example, if the handover process is the DAPS handover, the terminal device determines the first information and the second information. For specific content of the first information, refer to S902. For specific content of the second information, refer to S903.

It should be understood that step S1002 is optional.

S1003: The terminal device sends indication information X to the first network device. Correspondingly, the first network device receives the indication information X from the terminal device.

For example, if the terminal device determines, based on the first information and the second information, that a preset condition X is met, the terminal device sends the indication information X to the first network device.

For how to determine, based on the first information and the second information, that the preset condition X is met, refer to 903.

For example, the indication information X indicates the first network device to stop downlink transmission of the second network device, indicates the first network device to send a handover complete message to the second network device, indicates the first network device to release the second network device, or indicates the first network device to send an explicit release indication to the terminal device.

For example, the indication information X indicates that the terminal device considers that a needed data rate or MCS can be provided during a handover through the first network device alone.

In a possible design, if the first information includes data rate information, the second information includes a data rate of the first network device, and the terminal device determines, based on the data rate of the first network device in the second information and the data rate information in the first information, that the preset condition X is met, the indication information X may further indicate that a data rate being stable or not decreased can be ensured or a needed data rate can be provided during the handover through transmission by the first network device alone, indicate that a data rate can be ensured during the handover through transmission by the first network device alone, indicate that a data rate for transmission under the first network device reaches an expected value or reaches a threshold, or indicate that the data rate of the first network device is greater than a data rate of the second network device. For example, when the indication information X indicates that the data rate of the first network device is greater than the data rate of the second network device, the data rate of the second network device may be a last measured data rate before the terminal device receives the RRC reconfiguration message.

In another possible design, if the first information includes MCS information, the second information includes an MCS of the first network device, and the terminal device determines, based on the MCS of the first network device in the second information and the MCS information in the first information, that the preset condition X is met, the indication information X may further indicate that the MCS of the first network device reaches an expected value or reaches a threshold, or indicate that the MCS of the first network device is greater than an MCS of the second network device. For example, when the indication information X indicates that the MCS of the first network device is greater than the MCS of the second network device, the MCS of the second network device may be a last used MCS before the terminal device receives the RRC reconfiguration message.

For example, the indication information may be carried in an RRC message, UE assistance information, or a MAC CE.

In an implementation, whether the terminal device supports sending of the indication information X during the DPAS handover is a capability of the terminal device. For example, if the terminal device supports sending of the indication information X during the DPAS handover, the terminal device reports the indication information X to the second network device by using a terminal capability reporting message. For example, if the second network device configures, in the RRC reconfiguration message sent by the network device to the terminal device, signaling or an information element related to sending of the indication information X during the DPAS handover, the terminal device may send the indication information X to the first network device during the DAPS.

S1004A: The first network device sends a handover complete message to the second network device.

In a possible design, the first network device sends the handover complete message to the second network device based on the indication information X, or the first network device receives the indication information X, and the first network device sends the handover complete message to the second network device. Correspondingly, the second network device receives the handover complete message from the first network device. Optionally, the second network device receives the handover complete message from the first network device, and the second network device stops downlink data transmission.

S1004B: The first network device indicates the second network device to stop downlink data transmission.

In a possible design, the first network device indicates, based on the indication information X, the second network device to stop the downlink data transmission, or the first network device receives the indication information X, and the first network device indicates the second network device to stop the downlink data transmission. Correspondingly, the second network device receives, from the first network device, the indication indicating to stop the downlink data transmission. Optionally, when the second network device receives the handover complete message from the first network device, the second network device does not stop the downlink data transmission. After the second network device receives, from the first network device, the indication indicating to stop downlink transmission, the second network device stops the downlink data transmission.

S1004C: The first network device sends an explicit release indication to the terminal device.

In a possible design, the first network device sends the explicit release indication to UE based on the indication information X, or the first network device receives the indication information X, and the first network device sends the explicit release indication to the terminal device. Correspondingly, the terminal device receives the explicit release indication from the first network device, releases the second network device, and stops sending uplink data to the second network device and stops receiving downlink data.

It may be understood that the first network device may perform one or more steps of S1004A, S 1004B, or S1004C.

According to the foregoing method, the terminal device determines the first information and the second information. If the terminal device determines, based on the first information and the second information, that the preset condition X is met, the terminal device sends the indication information X to the first network device, so that the first network device sends the handover complete message to the second network device, or the second network device indicates the first network device to stop the downlink data transmission, or the second network device sends the explicit release indication to the terminal device. In this way, before a data rate on a first network device side is good and stable, the second network device can perform data transmission, so that a data transmission rate remains stable during a handover, avoiding a sudden drop in a data rate during the handover, improving handover performance, and ensuring good user experience.

In an implementation, when step S1002 is not performed, according to the foregoing method, the terminal device sends the indication information X to the first network device, and the first network device sends the handover complete message to the second network device, or the second network device indicates the first network device to stop the downlink data transmission, or the second network device sends the explicit release indication to the terminal device. In this way, before a data rate on a first network device side is good and stable, the second network device can perform data transmission, so that a data transmission rate remains stable during a handover, avoiding a sudden drop in a data rate during the handover, improving handover performance, and ensuring good user experience.

A sequence of the steps of the method in embodiments of this application may be adjusted, combined, or removed based on an actual requirement. Steps in each embodiment may be partially performed (for example, the terminal device may not perform the steps performed by the terminal device in the foregoing embodiments). An execution sequence of different steps may be changed. Embodiments described in this specification may be combined with other embodiments, different embodiments may be combined with each other, and different steps of different embodiments in this specification may be combined. Any step in the method in embodiments of this application may be optional in some cases or scenarios.

The modules/units in the apparatuses in embodiments of this application may be combined, divided, or removed based on an actual requirement.

"Embodiments" mentioned herein mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment.

Terms "first", "second", "third", "fourth", and the like (if any) in embodiments of this application are used to distinguish between similar objects but do not necessarily indicate a specific order or sequence.

In embodiments of this application, "include" may indicate an inclusion relationship, or an equal relationship. For example, if A includes B, A may include other content in addition to B, or A and B are same content.

In the descriptions of this application, unless otherwise specified, "/" indicates that associated objects are in an "or" relationship. For example, A/B may indicate A or B. In this application, "and/or" merely describes an association relationship between associated objects and indicates that three relationships may exist. For example, A and/or B may indicate three cases: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It may be understood that, to implement the functions in the foregoing embodiments, a network device and a terminal device include corresponding hardware structures and/or software modules for executing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

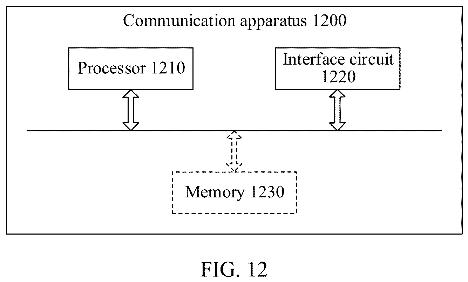

FIG. 11 and FIG. 12 are diagrams of structures of possible communication apparatuses according to embodiments of this application. The communication apparatuses may be configured to implement a function of the terminal device or the network device in the foregoing method embodiments. Therefore, beneficial effects of the foregoing method embodiments can also be implemented. In embodiments of this application, the communication apparatus may be one of the terminal devices 120a to 120j shown in FIG. 1, may be the base station 110a or 110b shown in FIG. 1, or may be a module (for example, a chip) used in the terminal device or the base station.

As shown in FIG. 11, the communication apparatus 1100 includes a processing unit 1110 and a transceiver unit 1120. The communication apparatus 1100 is configured to implement a function of the terminal device or the first network device in the method embodiments shown in FIG. 3 to FIG. 6.

When the communication apparatus 1100 is configured to implement the function of the first network device in the method embodiment shown in FIG. 3 or FIG. 4,
the processing unit 1110 invokes the transceiver unit 1120, to receive a handover request message from a second network device; the first network device obtains a first CSI report and a second CSI report, where the first CSI report is a CSI report obtained by a terminal device through measurement based on a reference signal of the first network device, and the second CSI report is a CSI report obtained by the terminal device through measurement based on a reference signal of the second network device; and if values of N parameters in the first CSI report are greater than or equal to values of corresponding parameters in the second CSI report, send a handover complete message to the second network device, where N is a positive integer.

In a possible design, the transceiver unit 1120 is configured to receive the second CSI report from the second network device or the terminal device.

In a possible design, the transceiver unit 1120 is configured to receive the handover request message from the second network device, where the handover request message includes the second CSI report.

In a possible design, the transceiver unit 1120 is configured to receive a random access message from the terminal device, where the random access message includes the second CSI report.

In a possible design, the transceiver unit 1120 is configured to receive the first CSI report from the terminal device.

In a possible design, the first CSI report is carried in a random access message.

In a possible design, the N parameters include at least one of a CQI, an L1-RSRP, and an L1-SINR.

When the communication apparatus 1100 is configured to implement the function of the terminal device in the method embodiment shown in FIG. 3 or FIG. 4, the processing unit 1110 invokes the transceiver unit 1120 to: receive a handover command from a second network device, where the handover command indicates that a handover process of the terminal device is a DAPS handover; and send a second CSI report to a first network device, where the second CSI report is a CSI report obtained by the terminal device through measurement based on a reference signal of the second network device.

In a possible design, the second CSI report is carried in a random access message.

When the communication apparatus 1100 is configured to implement the function of the first network device in the method embodiment shown in FIG. 5,
the processing unit 1110 invokes the transceiver unit 1120 to receive a handover request message from a second network device; the first network device receives indication information from a terminal device, where the indication information indicates the first network device to send a handover complete message to the second network device; and the first network device sends the handover complete message to the second network device based on the indication information.

When the communication apparatus 1100 is configured to implement the function of the terminal device in the method embodiment shown in FIG. 5,
the processing unit 1110 invokes the transceiver unit 1120 to receive first CSI configuration information and second CSI configuration information, and the terminal device measures a reference signal of a first network device based on the first CSI configuration information, to obtain a first CSI report, and measures a reference signal of a second network device based on the second CSI configuration information, to obtain a second CSI report; the terminal device sends the first CSI report to the first network device; and if values of N parameters in the first CSI report are greater than or equal to values of corresponding parameters in the second CSI report, the terminal device sends indication information to the first network device, where the indication information indicates the first network device to send a handover complete message to the second network device, and N is a positive integer.

In a possible design, the transceiver unit 1120 is configured to receive a handover command from the second network device, where the handover command indicates that a handover process of the terminal device is a DAPS handover.

In a possible design, the first CSI report is carried in a random access message.

In a possible design, the N parameters include at least one of a CQI, an L1-RSRP, and an L1-SINR.

When the communication apparatus 1100 is configured to implement the function of the first network device in the method embodiment shown in FIG. 6,
the processing unit 1110 invokes the transceiver unit 1120 to receive a handover request message from a second network device; and the first network device sends third CSI configuration information and fourth CSI configuration information, where a reporting periodicity that is of a third CSI report and that is configured based on the third CSI configuration information is greater than a reporting periodicity that is of a fourth CSI report and that is configured based on the fourth CSI configuration information; or a reporting type that is of a fourth CSI report that is configured based on the fourth CSI configuration information is dynamic reporting, and a reporting type that is of a third CSI report and that is configured based on the third CSI configuration information is periodic reporting, where the third CSI report is obtained by a terminal device through measurement based on a reference signal configured based on the third CSI configuration information, and the fourth CSI report is obtained by the terminal device through measurement based on a reference signal configured based on the fourth CSI configuration information.

In a possible design, the transceiver unit 1120 is configured to: receive a second CSI report, where the second CSI report is a CSI report obtained by the terminal device through measurement based on a reference signal of the second network device; receive the fourth CSI report; and if values of N parameters in the fourth CSI report are greater than or equal to values of corresponding parameters in the second CSI report, send a handover complete message to the second network device, where N is a positive integer.

In a possible design, the transceiver unit 1120 is configured to: receive a second CSI report, where the second CSI report is a CSI report obtained by the terminal device through measurement based on a reference signal of the second network device; receive the third CSI report; and if values of N parameters in the third CSI report are greater than or equal to values of corresponding parameters in the second CSI report, send a handover complete message to the second network device, where N is a positive integer.

In a possible design, the transceiver unit 1120 is configured to: receive a second CSI report, where the second CSI report is a CSI report obtained by the terminal device through measurement based on a reference signal of the second network device; receive the third CSI report and the fourth CSI report; and if values of N parameters in at least one of the third CSI report and the fourth CSI report are greater than or equal to values of corresponding parameters in the second CSI report, send a handover complete message to the second network device, where N is a positive integer.

For more detailed descriptions of the processing unit 1110 and the transceiver unit 1120, directly refer to the related descriptions in the method embodiment shown in FIG. 2. Details are not described herein again.

As shown in FIG. 12, the communication apparatus 1200 includes a processor 1210 and an interface circuit 1220. The processor 1210 and the interface circuit 1220 are coupled to each other. It may be understood that the interface circuit 1220 may be a transceiver or an input/output interface. Optionally, the communication apparatus 1200 may further include a memory 1230, configured to: store instructions executed by the processor 1210, store input data needed by the processor 1210 to run the instructions, or store data generated after the processor 1210 runs the instructions.

When the communication apparatus 1200 is configured to implement the method shown in FIG. 2, the processor 1210 is configured to implement the function of the processing unit 1110, and the interface circuit 1220 is configured to implement the function of the transceiver unit 1120.

When the communication apparatus is a chip used in a terminal device, the chip in the terminal device implements the function of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a module used in a network device, the module in the network device implements the function of the network device in the foregoing method embodiments. The module in the network device receives information from another module (for example, a radio frequency module or an antenna) in the network device, where the information is sent by a terminal device to the network device. Alternatively, the module in the network device sends information to another module (for example, a radio frequency module or an antenna) in the network device, where the information is sent by the network device to a terminal device. The module in the network device herein may be a baseband chip of the network device, or may be a DU or another module. The DU herein may be a DU in an open radio access network (open radio access network, O-RAN) architecture.

It may be understood that the processor in embodiments of this application may be a central processing unit (Central Processing Unit, CPU), or may be another general-purpose processor, a digital signal processor (Digital Signal Processor, DSP), an application specific integrated circuit (Application Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

This application provides another example of an apparatus. The notification apparatus includes at least one processor and at least one memory. The at least one processor is coupled to the at least one memory. The at least one memory is configured to store instructions. When the instructions are executed by the at least one processor, the communication apparatus is enabled to perform the method in the foregoing embodiments. An example in which the communication apparatus includes a processor and a memory is used. As shown in FIG. 12, the communication apparatus 1200 includes a processor 1210 and a memory 1230. The processor 1210 is coupled to the memory 1230. The memory 1230 stores instructions. When the instructions stored in the memory 1230 are executed by the processor 1210, the communication apparatus 1200 performs the method performed by the network device or the terminal device in the foregoing embodiments.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a network device or a terminal device. Alternatively, the processor and the storage medium may exist in a network device or a terminal device as discrete components.

All or some of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions of different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method comprises:
receiving, by a first network device, a handover request message from a second network device;
obtaining, by the first network device, a first channel state information CSI report and a second CSI report, wherein the first CSI report is a CSI report obtained by a terminal device through measurement based on a reference signal of the first network device, and the second CSI report is a CSI report obtained by the terminal device through measurement based on a reference signal of the second network device; and
if values of N parameters in the first CSI report are greater than or equal to values of corresponding parameters in the second CSI report, sending, by the first network device, a handover complete message to the second network device, wherein N is a positive integer.

2. The method according to claim 1, wherein obtaining, by the first network device, the second CSI report comprises:
receiving, by the first network device, the second CSI report from the second network device or the terminal device.

3. The method according to claim 2, wherein receiving, by the first network device, the second CSI report from the second network device comprises:
receiving, by the first network device, the handover request message from the second network device, wherein the handover request message comprises the second CSI report.

4. The method according to claim 2, wherein receiving, by the first network device, the second CSI report from the terminal device comprises:
receiving, by the first network device, a random access message from the terminal device, wherein the random access message comprises the second CSI report.

5. The method according to any one of claims 1 to 4, wherein obtaining, by the first network device, the first CSI report comprises:
receiving, by the first network device, the first CSI report from the terminal device.

6. The method according to claim 5, wherein the first CSI report is carried in a random access message.

7. The method according to any one of claims 1 to 6, wherein the N parameters comprise at least one of a channel quality indicator CQI, a layer 1 reference signal received power L1-RSRP, and a layer 1 signal to interference plus noise ratio L l-SINR.

8. The method according to any one of claims 1 to 7, wherein the first network device is a target network device, and the second network device is a source network device.

9. A communication method, wherein the method comprises:
receiving, by a terminal device, a radio resource control reconfiguration message from a second network device, wherein the radio resource control reconfiguration message indicates that a handover process of the terminal device is a dual active protocol stack DAPS handover; and
sending, by the terminal device, a second CSI report to a first network device, wherein the second CSI report is a CSI report obtained by the terminal device through measurement based on a reference signal of the second network device.

10. The method according to claim 9, wherein the second CSI report is carried in a random access message.

11. The method according to claim 9 or 10, wherein the first network device is a target network device, and the second network device is a source network device.

12. A communication method, wherein the method comprises:
sending, by a second network device, a handover request message to a first network device;
sending, by the second network device, a second CSI report to the first network device, wherein the second CSI report is a CSI report obtained by a terminal device through measurement based on a reference signal of the second network device;
sending, by the terminal device, a first CSI report to the first network device, wherein the first CSI report is a CSI report obtained by the terminal device through measurement based on a reference signal of the first network device; and
receiving, by the first network device, the first CSI report and the second CSI report, and if values of N parameters in the first CSI report are greater than or equal to values of corresponding parameters in the second CSI report, sending, by the first network device, a handover complete message to the second network device, wherein N is a positive integer.

13. A communication method, wherein the method comprises:
sending, by a second network device, a handover request message to a first network device, wherein the handover request message comprises a second CSI report, and the second CSI report is a CSI report obtained by a terminal device through measurement based on a reference signal of the second network device;
sending, by the terminal device, a first CSI report to the first network device, wherein the first CSI report is a CSI report obtained by the terminal device through measurement based on a reference signal of the first network device; and
receiving, by the first network device, the first CSI report and the second CSI report, and if values of N parameters in the first CSI report are greater than or equal to values of corresponding parameters in the second CSI report, sending, by the first network device, a handover complete message to the second network device, wherein N is a positive integer.

14. A communication method, wherein the method comprises:
sending, by a second network device, a handover request message to a first network device;
sending, by the second network device, a radio resource control reconfiguration message to a terminal device, wherein the radio resource control reconfiguration message indicates that a handover process of the terminal device is a DAPS handover;
sending, by the terminal device, a first CSI report and a second CSI report to the first network device, wherein the first CSI report is a CSI report obtained by the terminal device through measurement based on a reference signal of the first network device, and the second CSI report is a CSI report obtained by the terminal device through measurement based on a reference signal of the second network device; and
receiving, by the first network device, the first CSI report and the second CSI report, and if values of N parameters in the first CSI report are greater than or equal to values of corresponding parameters in the second CSI report, sending, by the first network device, a handover complete message to the second network device, wherein N is a positive integer.

15. A communication method, wherein the method comprises:
receiving, by a terminal device, first CSI configuration information and second CSI configuration information, measuring, by the terminal device, a reference signal of a first network device based on the first CSI configuration information, to obtain a first CSI report, and measuring a reference signal of a second network device based on the second CSI configuration information, to obtain a second CSI report; and
if values of N parameters in the first CSI report are greater than or equal to values of corresponding parameters in the second CSI report, sending, by the terminal device, indication information to the first network device, wherein the indication information indicates the first network device to send a handover complete message to the second network device, and N is a positive integer.

16. The method according to claim 15, further comprising:
receiving, by the terminal device, a radio resource control reconfiguration message from the second network device, wherein the radio resource control reconfiguration message indicates that a handover process of the terminal device is a DAPS handover.

17. The method according to claim 15 or 16, wherein the first CSI report is carried in a random access message.

18. The method according to any one of claims 15 to 17, wherein the N parameters comprise at least one of a CQI, an L1-RSRP, and an L1-SINR.

19. The method according to any one of claims 15 to 18, wherein the first network device is a target network device, and the second network device is a source network device.

20. A communication method, wherein the method comprises:
receiving, by a first network device, a handover request message from a second network device;
receiving, by the first network device, indication information from a terminal device, wherein the indication information indicates the first network device to send a handover complete message to the second network device; and
sending, by the first network device, the handover complete message to the second network device based on the indication information.

21. The method according to claim 20, wherein the first network device is a target network device, and the second network device is a source network device.

22. A communication method, wherein the method comprises:
sending, by a second network device, second CSI configuration information to a terminal device;
sending, by the second network device, a handover request message to a first network device;
sending, by the first network device or the second network device, first CSI configuration information to the terminal device;
receiving, by the terminal device, the first CSI configuration information and the second CSI configuration information, measuring, by the terminal device, a reference signal of the first network device based on the first CSI configuration information, to obtain a first CSI report, and measuring a reference signal of the second network device based on the second CSI configuration information, to obtain a second CSI report;
if values of N parameters in the first CSI report are greater than or equal to values of corresponding parameters in the second CSI report, sending, by the terminal device, indication information to the first network device, wherein the indication information indicates the first network device to send a handover complete message to the second network device, and N is a positive integer; and
receiving, by the first network device, the indication information from the terminal device, and sending, by the first network device, the handover complete message to the second network device based on the indication information.

23. A communication method, wherein the method comprises:
receiving, by a first network device, a handover request message from a second network device; and
sending, by the first network device, third CSI configuration information and fourth CSI configuration information, wherein
a reporting periodicity that is of a third CSI report and that is configured based on the third CSI configuration information is greater than a reporting periodicity that is of a fourth CSI report and that is configured based on the fourth CSI configuration information; or a reporting type that is of a fourth CSI report and that is configured based on the fourth CSI configuration information is dynamic reporting, and a reporting type that is of a third CSI report and that is configured based on the third CSI configuration information is periodic reporting, wherein the third CSI report is obtained by a terminal device through measurement based on a reference signal configured based on the third CSI configuration information, and the fourth CSI report is obtained by the terminal device through measurement based on a reference signal configured based on the fourth CSI configuration information.

24. The method according to claim 23, further comprising:
receiving, by the first network device, a second CSI report, wherein the second CSI report is a CSI report obtained by the terminal device through measurement based on a reference signal of the second network device;
receiving, by the first network device, the fourth CSI report; and
if values of N parameters in the fourth CSI report are greater than or equal to values of corresponding parameters in the second CSI report, sending, by the first network device, a handover complete message to the second network device, wherein N is a positive integer.

25. The method according to claim 23, further comprising:
receiving, by the first network device, a second CSI report, wherein the second CSI report is a CSI report obtained by the terminal device through measurement based on a reference signal of the second network device;
receiving, by the first network device, the third CSI report; and
if values of N parameters in the third CSI report are greater than or equal to values of corresponding parameters in the second CSI report, sending, by the first network device, a handover complete message to the second network device, wherein N is a positive integer.

26. The method according to claim 23, further comprising:
receiving, by the first network device, a second CSI report, wherein the second CSI report is a CSI report obtained by the terminal device through measurement based on a reference signal of the second network device;
receiving, by the first network device, the third CSI report and the fourth CSI report; and
if values of N parameters in at least one of the third CSI report and the fourth CSI report are greater than or equal to values of corresponding parameters in the second CSI report, sending, by the first network device, a handover complete message to the second network device, wherein N is a positive integer.

27. A communication method, wherein the method comprises:
sending, by a second network device, a handover request message to a first network device;
sending, by the first network device, third CSI configuration information and fourth CSI configuration information, wherein a reporting periodicity that is of a third CSI report and that is configured based on the third CSI configuration information is greater than a reporting periodicity that is of a fourth CSI report and that is configured based on the fourth CSI configuration information; or a reporting type that is of a fourth CSI report and that is configured based on the fourth CSI configuration information is dynamic reporting, and a reporting type that is of a third CSI report and that is configured based on the third CSI configuration information is periodic reporting;
receiving, by the terminal device, the third CSI configuration information and the fourth CSI configuration information, measuring, by the terminal device based on the third CSI configuration information, a reference signal configured based on the third CSI configuration information, to obtain the third CSI report, and measuring, based on the fourth CSI configuration information, a reference signal configured based on the fourth CSI configuration information, to obtain the fourth CSI report; and
sending, by the terminal device, the third CSI report and the fourth CSI report to the first network device.

28. A communication apparatus, comprising a unit or a module configured to perform the method according to any one of claims 1 to 8, comprising a unit or a module configured to perform the method according to any one of claims 9 to 11, comprising a unit or a module configured to perform the method according to any one of claims 15 to 19, comprising a unit or a module configured to perform the method according to claim 20 or 21, or comprising a unit or a module configured to perform the method according to any one of claims 23 to 26.

29. A communication apparatus, comprising one or more processors, wherein the one or more processors are configured to perform the method according to any one of claims 1 to 8, perform the method according to any one of claims 9 to 11, perform the method according to any one of claims 15 to 19, perform the method according to claim 20 or 21, or perform the method according to any one of claims 23 to 26.

30. A chip system, wherein the chip system comprises at least one chip and a memory, and the at least one chip is configured to: read and execute a program stored in the memory, to implement the method according to any one of claims 1 to 8, implement the method according to any one of claims 9 to 11, implement the method according to any one of claims 15 to 19, implement the method according to claim 20 or 21, or implement the method according to any one of claims 23 to 26.

31. A readable storage medium, wherein the readable storage medium comprises a program, and when the program is run on an apparatus, the apparatus is enabled to perform the method according to any one of claims 1 to 8, perform the method according to any one of claims 9 to 11, perform the method according to any one of claims 15 to 19, perform the method according to claim 20 or 21, or perform the method according to any one of claims 23 to 26.

32. A computer program product, comprising instructions, wherein when the instructions are run on a computer, the computer is enabled to perform the method according to any one of claims 1 to 8, perform the method according to any one of claims 9 to 11, perform the method according to any one of claims 15 to 19, perform the method according to claim 20 or 21, or perform the method according to any one of claims 23 to 26.
